# EUROPEAN PATENT SPECIFICATION

(11) **EP 2 527 991 B1**
(45) Date of publication and mention of the grant of the patent: **26.12.2018**
(21) Application number: 10843849.0
(22) Date of filing: 19.01.2010
(51) Int. Cl.: G06F 17/30, G06F 12/00, G06F 17/21, G06F 17/24

(54) **ANALYSIS METHOD, ANALYSIS DEVICE, AND ANALYSIS PROGRAM**
ANALYSEVERFAHREN, ANALYSEVORRICHTUNG SOWIE ANALYSEPROGRAMM
PROCÉDÉ D'ANALYSE, DISPOSITIF D'ANALYSE ET PROGRAMME D'ANALYSE

(43) Date of publication of application: 28.11.2012
(73) Proprietor: Fujitsu Limited, Kawasaki-shi, Kanagawa 211-8588 (JP)
(72) Inventor: WASHIO, Suguru, Kawasaki-shi Kanagawa 211-8588 (JP)
(74) Representative: Hoffmann Eitle
(86) International application number: PCT/JP2010/050522
(87) International publication number: WO 2011/089683

(56) References cited:
- WO-A1-2007/132524
- WO-A1-2007/132524
- JP-A- 2006 268 638
- JP-A- 2006 268 638
- JP-A- 2008 293 506
- US-A1- 2005 223 325
- YAHATA Y ET AL: "SS2004-31 Reconstruction method of an XBRL document corresponding to revision of taxonomoy = Taxonomy no Kaitei ni Taio shita XBRL Bunsho no Saikochiku Shuho", IEICE TECHNICAL REPORT, DENSHI JOUHOU TSUUSHIN GAKKAI, JP, vol. 104, no. 466, 1 January 2004 (2004-01-01), pages 31-36, XP008167791, ISSN: 0913-5685
- YOHEI YAHATA ET AL.: 'Taxonomy no Kaitei ni Taio shita XBRL Bunsho no Saikochiku Shuho' IEICE TECHNICAL REPORT vol. 104, no. 47, 18 November 2004, pages 31 - 36, XP008167791

## Description

### Technical Field

The present invention relates to a method of analyzing documents, an apparatus for analyzing documents, and a program for analyzing documents.

### Background Art

In companies and the like, a lot of information, such as documents, is managed in electronic formats by computerization thereof. Further, in recent years, also documents storage of which is legally compelled are permitted to be stored as electromagnetic records in place of paper-based records.

However, simple computerization of documents does not facilitate management and reuse of documents. To facilitate creation, distribution, and reuse of document data, the standardization of computerized information is proceeding in various fields. The standardization of computerized information achieves the commonality of the format of document data, names of information items, IDs, etc. By using information item names made common, it is possible to find a desired item from existing document data.

By the way, document data is sometimes changed in details of description therein even after creation, due to various reasons, such as revision of laws or correction of errors. It is necessary to grasp a changed part and change contents for the purpose of management of document data, so that there is a demand for an analysis method of automatically analyzing a changed part and change contents by checking document data items before and after the change against each other. However, if the document data items are simply checked against each other, items having different names are detected as different ones, even when the different names have the same meaning. To overcome such inconvenience, there has been proposed a method of normalizing a read document by converting the document to predetermined characters or codes before executing data matching, to thereby improve accuracy of data matching. Further, to analyze change contents, it is necessary to associate data before the change with data after the change, but it is difficult to perform data association by simple data matching. To solve this problem, there has been proposed an analysis method in which matching of data before the change and data after the change is performed by making use of common item names and file names included in the document data, to thereby extract data items corresponding to each other.

### Citation List

### Patent literature

PTL1: Japanese Laid-Open Patent Publication No. 2004-295500

Document US 2005/223325 A1 describes a document structure-editing program which is capable of automatically generating difference information indicative of the differences between an old schema and a new schema. Document structure-defining information is edited by a document structure-editing device in response to an operating input. At this time, a record of an edit history indicating details of editing of the document structure-defining information is recorded on a storage device by an edit history-recording device, whenever the operating input is performed. Difference information indicative of the differences between the document structure-defining information before an edit and the same after the edit is generated by a difference information-generating device, based on the edit history recorded by the edit history-recording device.

Document WO 2007/132524 A1 describes a difference extracting method executing the steps of reading data of a first set from a storage device stored with a plurality of sets of data containing a plurality of elements as nodes of the tree structure, extracting, for each link in the tree structure of the first set, the link information containing the information on the elements at the two ends of the links and the information indicating the link relation, and storing the storage device with the first link information list containing the link information on the first set, the steps of reading the data of a second set from the storage device, extracting the link information for each of the links in the tree structure of the second set, and storing the storage device with a second link information list containing the link information on the second set, and the step of extracting the difference on the link between the first set and the second set, on the basis of the first link information list and the second link information list.

### Summary of Invention

### Technical Problem

However, in the conventional analysis, if the common item names and file names have not been set, it is impossible to perform data association, and hence difficult to analyze the change. Note that information which enables unique identification of information data, such as an item name or a file name, is called an identifier.

If comparison of two document data items as objects shows a match between identifiers, it is possible to associate the two items or files as the same items or the same kind of files. However, it is sometimes necessary to change an item name e.g. due to revision of laws. This also applies to a file name. As mentioned above, an identifier for identifying the same items or files is sometimes changed e.g. due to a change, but simple data matching merely enables grasping of which information is deleted and which information is added. However, information which a user desires to know most by the analysis of the change is information that "Identifier and data type of information A are changed whereby the information A is changed to information B". To know such information, it is necessary to manually confirm correspondences between items in document data one by one, and hence it takes an enormous amount of time to analyze the contents of the change. Further, in most cases, it is difficult for a person other than a person who understands the contents of the document to associate the items, and a large burden is placed on an operator.

The present invention has been made in view of this point, and an object thereof is to provide an analysis method, an analysis apparatus, and an analysis program which make it possible to perform change analysis on a document even when different identifiers are set to the same information data items.

### Solution to Problem

To solve the above problems, the present invention provides the subject matter of the independent claims where advantagous embodiments are described in the dependent claims. As an unrelated example, there is provided an analysis method of comparing documents, and analyzing a changed part which does not match between the documents. According to the analysis, first document data and second document data as objects to be compared are read out from storage means for storing document data including an item value file which describes values of items included in each document, and a definition file which defines the items and a relationship between the items. Then, the relationship between the items in the definition file is analyzed to thereby generate structure information between the items. Next, identifiers of items defined in the first document data and identifiers of items defined in the second document data are compared, to thereby detect first unassociated items existing only in the first document data and second unassociated items existing only in the second document data. Then, based on the structure information between the items, a relationship between items related to the first unassociated items and a relationship between items related to the second unassociated items are compared, and the first unassociated item and the second unassociated item of which the respective relationships between the related items are determined to be common are associated.

### Advantageous Effects of Invention

According to the above-described analysis method, analysis apparatus, and analysis program, it is possible to perform analysis even when different identifiers are set for the same information data items.

The above and other objects, features and advantages of the present invention will become apparent from the following description when taken in conjunction with the accompanying drawings which illustrate preferred embodiments of the present invention by way of example.

### Brief Description of Drawings

FIG. 1 illustrates an example of the configuration of an analysis apparatus according to a first embodiment.
FIG. 2 illustrates an example of an XBRL structure.
FIG. 3 is a block diagram of an example of the hardware configuration of an analysis apparatus according to a second embodiment.
FIG. 4 is a block diagram of an example of the software configuration of the analysis apparatus.
FIG. 5 illustrates an example of an instance document of a report.
FIG. 6 illustrates an example of document reference structure information of XBRL data.
FIG. 7 illustrates an example of item and type information extracted from a schema.
FIG. 8 illustrates an example of presentation link structure information.
FIG. 9 illustrates an example of reference link structure information.
FIG. 10 illustrates an example of item value information.
FIG. 11 illustrates a document reference structure comparison result obtained after execution of changed information analysis processing.
FIG. 12 illustrates an item and type information comparison result obtained after execution of the changed information analysis processing.
FIG. 13 illustrates an item value comparison result obtained after execution of the changed information analysis processing.
FIG. 14 illustrates a document reference structure comparison result obtained after execution of information matching processing.
FIG. 15 illustrates an item and type information comparison result obtained after execution of the information matching processing.
FIG. 16 illustrates an item value comparison result obtained after execution of the information matching processing.
FIG. 17 illustrates candidates for an item to match and probabilities thereof.
FIG. 18 illustrates probabilities after first learning, and candidates for an item to match and probabilities thereof.
FIG. 19 illustrates probabilities after second learning, and candidates for an item to match and probabilities thereof.
FIG. 20 is a flowchart of an entire process executed by the analysis apparatus.
FIG. 21 is a flowchart of a procedure of a data structure analysis process.
FIG. 22 is a flowchart of a procedure of a changed part analysis process.
FIG. 23 is a flowchart of a procedure of a matching (document equivalence analysis) process.
FIG. 24 is a flowchart of a procedure of a matching (item equivalence analysis) process.
FIG. 25 is a flowchart of a procedure of a matching learning process.

### Description of Embodiments

Embodiments of the present invention will be explained below with reference to the accompanying drawings.

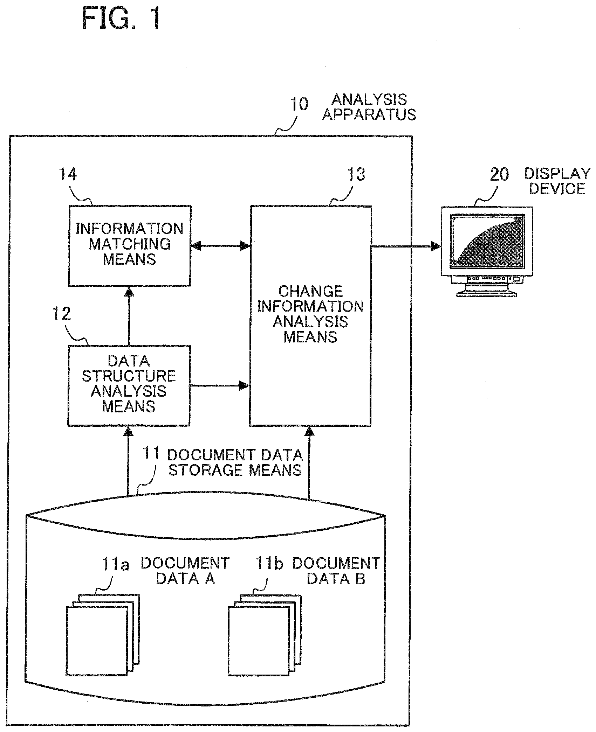

FIG. 1 illustrates an example of the configuration of an analysis apparatus according to a first embodiment.

The analysis apparatus 10 includes document data storage means 11, data structure analysis means 12, change information analysis means 13, and information matching means 14. The data structure analysis means 12, the change information analysis means 13, and the information matching means 14 each realize a processing function thereof through execution of an analysis program by a computer.

The document data storage means 11 is a storage device for storing documents as objects to be compared, and stores document data A 11a and document data B 11b. The document data A 11a and the document data B 11b each include an item value file which describes values of items included in the document and a definition file which defines the items and a relationship between the items. The document data A 11a and document data B 11b have been created based on specifications determined in advance. Although in FIG. 1, the document data storage means 11 is provided within the analysis apparatus 10, the document data storage means 11 may be provided outside the analysis apparatus 10.

Upon receipt of inputs of designation of document data as objects to be compared and an analysis instruction, the data structure analysis means 12 starts processing. The data structure analysis means 12 reads out the object document data A 11a and document data B 11b from the document data storage means 11, and analyzes the data structures of the respective data. To associate files and items before a change and files and items after the change, the data structure analysis means 12 analyzes a reference structure between the files forming the document data and a relational structure of the items included in the document data, as the data structure. For example, the data structure analysis means 12 analyzes reference relationships between the files forming the document data, and detects each file structure based on the reference relationships to generate document structure information. Further, the data structure analysis means 12 analyzes relationships between the items described in the definition file, and detects a relational structure between the items to generate structure information between the items. A reference relationship between files is determined such that, for example, when a file 1 refers to a file 2, the files 1 and 2 have a parent-child relationship in which the file 1 is a parent, and the file 2 is a child. Further, when the file 1 refers to the file 2 and a file 3, it is determined that the files 2 and 3 have a sibling relationship. As mentioned above, the data structure analysis means 12 analyzes reference relationships between files to detect parent-child relationships and sibling relationships between the files. The document structure information based on the detected reference relationship between the files of the document data is generated, and is stored in the storage means. Relationships between items are recognized by analyzing definition files which define the items, respectively, and for example, a relationship between the items, such as a presentational relationship or a semantic relationship, is recognized. For example, a presentational parent-child relationship in which an item "a" is displayed under an item "b" is extracted, and is recorded as structure information between the items. Further, at the same time, a feature, such as a data type, of an item included in the document is extracted. A definition file which defines an item is analyzed, whereby, for example, a feature that the item "a" exists and the data type thereof is "decimal-numeric type" is extracted.

The change information analysis means 13 analyzes a changed part where the document data A 11a and the document data B 11b do not match, and generates change information. The change information analysis means 13 performs file equivalence analysis for associating files which can be regarded as identical before and after the change, and item equivalency analysis for associating items which can be regarded as identical before and after the change. In the file equivalence analysis, a file identifier of a file of the document data A 11a and a file identifier of a file of the document data B 11b are compared, and the file of the document data A 11a and the file of the document data B 11b, which are determined to be the common files, are associated with each other. The file identifiers for uniquely identifying the files, respectively, are compared, and if they are identical in the whole range or predetermined partial range thereof, it is determined that the files match. For example, a part added to a file name by a namespace URI (uniform resource identifier) may be excluded from the comparison range. Further, a file existing in only one of the document data A 11a and the document data B 11b, and could not be associated is set as an unassociated file. A file correspondence table is generated in which files which have been associated are registered in a column of matching information, and unassociated files are registered in a column of files existing only in the document data A or a column of files existing only in the document data B. Similarly in the item equivalency analysis, an identifier of an item included in the document data A 11a and an identifier of an item included in the document data B 11b are compared, and the matching identifiers are associated, and are registered in the matching information in an item correspondence table. Items existing in only one of the document data A 11a and the document data B 11b are set as unassociated items, and are registered in columns of unassociated items of each document in the item correspondence table. Further, a value of each item associated by the identifier is extracted from the item value file. Then, after the unassociated items are associated by the information matching means 14, change contents are analyzed. A value of an associated item is extracted from the item value file. The values of the associated items are extracted from the item value files of the document data A 11a and the document data B 11b, respectively. Then, the features and the item values of the associated items are compared to analyze the change contents. As a result of the analysis of the change contents, the file correspondence table and the item correspondence table are displayed on a display apparatus 20, on an as-needed basis, and the changed part and the change contents are reported to the user.

The information matching means 14 associates the unassociated files of the document data A 11a and the document data B 11b based on the document structure information and the file correspondence table. Further, the information matching means 14 performs processing for matching the unassociated items included in the document data A 11a and the document data B 11b based on the structure information between the items and the item correspondence table. The matching processing refers to processing for associating identical information data items having different identifiers given thereto. In the file matching processing, files having reference relationships with an unassociated file of the document data A 11a and files having reference relationships with an unassociated file of the document data B 11b are compared based on the document structure information, and the files determined to be common are associated with each other. Whether or not files are common is determined depending on whether or not all files having the reference relationships match, or the number or ratio of matching files is larger than a reference value. Files of the document data A 11a and the document data B 11b, associated by the information matching means 14, are moved to the column of matching information in the file correspondence table. In the item matching processing, contents of structure information between items related to an unassociated item in the document data A 11a and contents of structure information between items related to an unassociated item in the document data B 11b are compared based on the structure information between items and the item correspondence table, to thereby determine whether or not the relationships between the items are similar. For example, items displayed before and after the respective unassociated items are compared, and if all or not less than a predetermined ratio of the items match, it is determined that the relationships between the items are similar. The files and items in the document data A 11a and the document data B 11b, associated by the information matching means 14, are registered as matching information. Thereafter, the processing returns to the change information analysis means 13, and analysis processing is performed on change contents of the newly associated items.

A description will be given of the operation of the analysis apparatus 10 configured as above and a processing procedure performed based on an analysis method by the analysis apparatus 10.

The document data storage means 11 stores the document data A 11a and the document data B 11b each including an item value file which describes values of items included in each document, and a definition file which defines an item identifier, a type, and a relationship between items, which characterize each item.

Upon receipt of designation of the object document data A 11a and document data B 11b, the analysis apparatus 10 starts processing. The data structure analysis means 12 reads out the object document data A 11a and document data B 11b from the document data storage means 11. Then, the data structure analysis means 12 performs change analysis on the files and items in the document data A 11a and the document data B 11b.

The change analysis on files will be described. The data structure analysis means 12 analyzes reference relationships between files which belong to the respective document data of the read document data A 11a and document data B 11b. The data structure analysis means 12 detects parent-child relationships or sibling relationships of the files based on the reference relationships, i.e. file structures of the document data. The detected file structures of the respective document data are stored in the storage means as the document structure information of the document data A 11a and the document structure information of the document data B 11b. The change information analysis means 13 compares the file identifier of each file of the document data A 11a and the file identifier of each file of the document data B 11b, and associates the files determined to be identical. Files that could be associated are registered as matching information in the file correspondence table. Files that could not be associated by the file identifiers are set as unassociated files. The information matching means 14 performs processing for matching unassociated files of the document data A 11a and unassociated files of the document data B 11b based on the document structure information. The information matching means 14 compares a file having a predetermined reference relationship with an unassociated file of the document data A 11a and a file having a predetermined reference relationship with an unassociated file of the document data B 11b. For example, a file corresponding to a parent of an unassociated file of the document data A 11a and a file corresponding to a parent of an unassociated file of the document data B 11b are compared, based on the reference relationships. Then, if it is recognized that the files corresponding to the parents are identical, the unassociated file of the document data A 11a and the unassociated file of the document data B 11b are associated with each other. The associated files are registered in the file correspondence table as the matching information.

Next, the change analysis on items will be described. The data structure analysis means 12 analyzes the definition files of the respective document data items of the read document data A 11a and the document data B 11b. Then, the data structure analysis means 12 extracts features of items to thereby generate item information, and analyzes the relationships between the items to thereby generate structure information between the items. The change information analysis means 13 compares the item identifier of each item in the document data A 11a and the item identifier of each item in the document data B 11b, and associates the items determined to be identical. Items that could be associated are registered as the matching information in the item correspondence table. Items that could not be associated by the item identifiers are registered as unassociated items. Further, at this time, as to the items that could be associated, values of these items may be extracted from the respective item value files of the document data A 11a and the document data B 11b and be compared with each other to thereby check whether or not the values are changed. The information matching means 14 performs association between an unassociated item in the document data A 11a and an unassociated item in the document data B 11b, based on the structure information between the items. When it is determined based on the structure information between the items that the relationships between the items are common, the information matching means 14 associates the unassociated items in the document data A 11a and the unassociated items in the document data B 11b. The associated items are registered in the matching information in the item corresponding table. Next, the change information analysis means 13 analyzes the change contents as to the associated items. The change information analysis means 13 performs analysis processing on the change contents by extracting the values of the associated items from the respective item value files of the document data A 11a and the document data B 11b for comparison, and checking whether or not the extracted values have been changed. Further, also when an item identifier (item name) has been changed, the fact that the item identifier has been changed is stored as the change contents. Note that the processing for analyzing change contents is omitted with respect to an item which has been subjected to this analysis prior to the information matching means 14.

The results of the analysis on the change contents, the file correspondence table, and the item correspondence table, generated as described above, are displayed on the display apparatus 20, on an as-needed basis, to report the changed part and the change contents to the user.

Although in the above description, the analysis on the files is performed, and then the analysis on the items is performed, processing for the analyses may be performed in parallel.

By executing the above processing, the files of the document data A 11a and the files of the document data B 11B as objects to be compared, and the items included in the document data A 11a and the items included in the document data B 11B are subjected to association. At this time, even when an identifier is changed, the association is executed by detecting information data which can be regarded to be identical, based on the reference relationships between the files, the relationships between the items, and the features of the items. This makes it possible to perform analysis even when different identifiers are set for the same information data, and it is possible to recognize the change contents by comparing the associated files or items. As a result, it is possible to alleviate a burden on the operator for the analysis.

Hereinafter, as a second embodiment, a description will be given of a case where an object document is a document created based on XBRL (eXtensible Business Reporting Language).

First, the outline of XBRL will be described. XBRL is an XML-based (eXtensible Markup Language) language standardized so as to enable creation, distribution, and utilization of information for various kinds of financial reporting. Standardization operations and spreading activities of XBRL are performed by the XBRL International which is a standard setting organization. In Japan, the XBRL Japan plays a role in the operations and activities. The detailed specifications of XBRL are described e.g. in "XBRL Specifications [searched on January 14, 2010] and the Internet <URL: http://www.xbrl.org/Specifications/>. Similar specifications are also issued from the XBRL International.

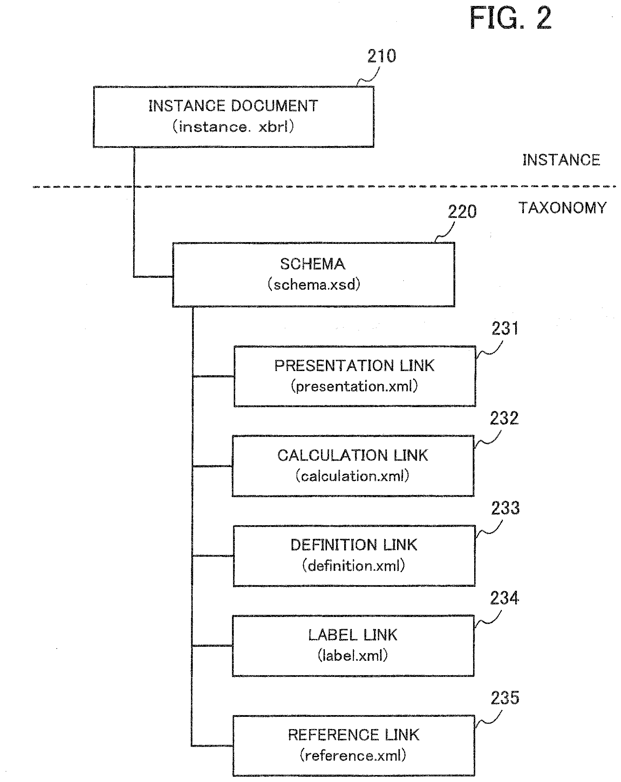

FIG. 2 illustrates an example of an XBRL structure. FIG. 2 is an example of the XBRL structure based on the XBRL 2.1 Specification.

In XBRL, the financial information is described by two kinds of documents: an instance and a taxonomy. The taxonomy is a collection of a schema 220 and a plurality of linkbases 231 to 235.

An instance document 210, the schema 220, a presentation link 231, a calculation link 232, a definition link 233, a label link 234, and a reference link 235 are creased as separate files, to each of which an identifier (file name) for uniquely identifying a file is set. Further, the reference relationships between the documents have a tree structure as illustrated in FIG. 2, which is configured such that a parent document in the tree refers to child documents. More specifically, the instance document 210 refers to the schema 220. Further, the schema 220 refers to the presentation link 231, the calculation link 232, the definition link 233, the label link 234, and the reference link 235. Hereinafter, the collection of the instance document 210, the schema 220, the presentation link 231, the calculation link 232, the definition link 233, the label link 234, and the reference link 235 is referred to as XBRL data, and each one of the files of the XBRL data is referred to as an XBRL document or simply, a document.

The instance document 210 is the XML document which describes actual financial information, and has actual data, such as values of items and text, described therein. Hereinafter, the actual data, such as numerical values and text, described with respect to the items in the document is collectively referred to as item values. The instance document is the same as the item value file described in the first embodiment. The taxonomy document defines contents, a structure, and a handling method of the instance document 210. The taxonomy document is the same as the definition file described in the first embodiment. The schema 220 is a document that defines information of the names and types of items and the like described in the instance document 210.

The plurality of linkbases, i.e. the presentation link 231, the calculation link 232, the definition link 233, the label link 234, and the reference link 235 are the documents each of which describes a link to items. The presentation link 231 defines a presentation order and a parent-child relationship between items. For example, the presentation link 231 defines a presentation order that "next to item 'CurrentAsset', item 'NonCurrentAssets' is displayed". The calculation link 232 defines a calculation relationship between items. For example, the calculation link 232 defines a calculation relationship that "'Assets' = 'CurrentAsset' + 'NonCurrentAssets'". The definition link 233 defines an accounting semantic relationship between items. For example, the definition link 233 defines a semantic relationship that "'NonCurrentAssets' and 'FixedAssets' are conceptually identical". The label link 234 defines a label of each item. For example, the label link 234 defines information of a label that "label of 'Assets' is 'ASSETS'". The reference link 235 defines literature information as a basis for definition of each item. For example, the reference link 235 defines literature information that "'Assets' is based on Regulations of Financial Statements, Format A". As mentioned above, additional information to each item defined by a link, such as a label and literature information, is referred to as a resource in the following description.

In general, XBRL data is changed in contents of the description (document structure, values of items, definition of items, links, etc.) due to revision of laws, a change in the accounting standards, and a change in the policy of the financial reporting of a company or a supervisory organization. Further, the contents of the description are sometimes changed for correction of errors. The contents of the description are changed at least once a year, or several or more times when changed many times. Therefore, to perform creating, shifting, analyzing, comparing, and like processing of XBRL data, it is necessary to accurately grasp not only the changed part, but also the change contents. Of course, it is not impossible to accurately grasp the change contents based on information matching by manual operations or change history information prepared when the change was made. However, the currently used XBRL data has approximately 3000 to 10000 pieces of items, and hence it takes an enormous amount of time to manually perform information matching on all changed parts.

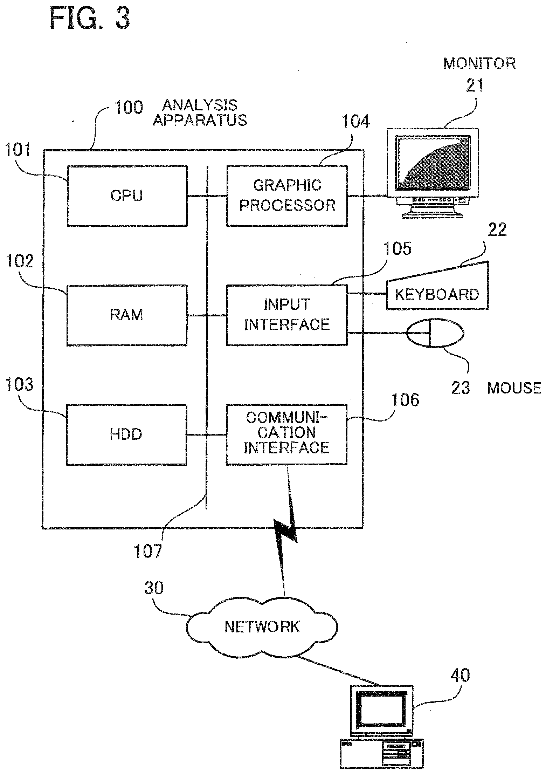

FIG. 3 is a block diagram of an example of the hardware configuration of an analysis apparatus according to the second embodiment.

The overall operation of the analysis apparatus 100 is controlled by a CPU (central processing unit) 101. A RAM (Random Access Memory) 102, an HDD (Hard Disk Drive) 103, a graphic processor 104, an input interface 105, and a communication interface 106 are connected to the CPU 101 via a bus 107.

The RAM 102 temporarily stores at least part of the program of an OS (operating system) and application programs which the CPU 101 is caused to execute. Further, the RAM 102 stores various data necessitated by the CPU 101 for processing. The HDD 103 stores the OS and the application programs. A monitor 21 is connected to the graphic processor 104. The graphic processor 104 displays images on the screen of the monitor 21 according to commands from the CPU 101. To the input interface 105 are connected a keyboard 22 and a mouse 23. The input interface 105 transfers signals sent from the keyboard 22 and the mouse 23 to the CPU 101 via the bus 107. The communication interface 106 is connected to a network 30 and may be configured to transmit and receive data to and from a terminal apparatus 40 via the network 30.

With the above-mentioned hardware configuration, it is possible to realize the processing functions of the analysis apparatus 100. Note that although the hardware configuration of the analysis apparatus 100 is illustrated in FIG. 3, the terminal apparatus 40 has the same hardware configuration as that of the analysis apparatus 100. Further, an instruction may be input from the terminal apparatus 40 connected via the network 30 and a result of the analysis may be output to a monitor of the terminal apparatus 40.

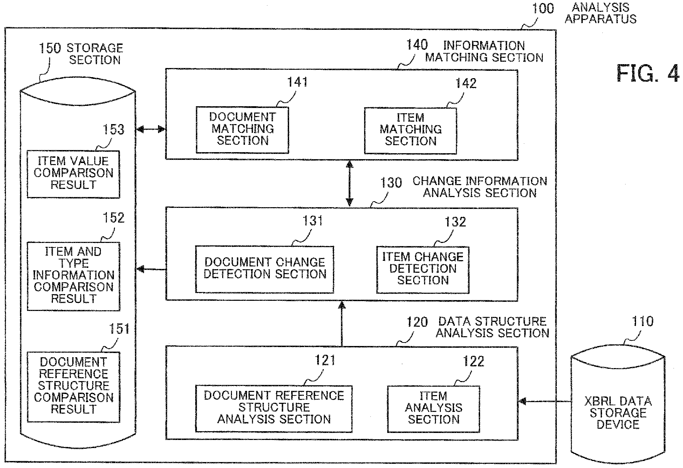

FIG. 4 is a block diagram of an example of the software configuration of the analysis apparatus.

The analysis apparatus 100 includes a data structure analysis section 120 that analyzes data structure of XBRL data, a change information analysis section 130 that analyzes a changed part and change contents, an information matching section 140 that performs matching of unassociated information data, and a storage section 150, and is connected to an XBRL data storage device 110 that stores data as analysis objects, for analysis of the objects.

The XBRL data storage device 110 stores XBRL data before and after a change as objects to be compared. The XBRL data storage device 110 may be provided within the analysis apparatus 100.

The data structure analysis section 120 includes a document reference structure analysis section 121 and an item analysis section 122, reads out the XBRL data before the change and the XBRL data after the change from the XBRL data storage device 110, and performs analysis on the reference structure between documents and analysis on the link structure between items. The document reference structure analysis section 121 analyzes the document reference structures of the XBRL data before and after the change as the objects to be compared, based on the reference relationships between documents. For example, the document reference structure analysis section 121 detects the linkbases 231 to 235 which the schema 220 refers to, and grasps a parent-child relationship between documents. The document reference structure analysis section 121 generates document reference structure information indicating a hierarchical structure between the documents based on the thus detected parent-child and sibling relationships between the documents, and notifies the change information analysis section 130 of the generated document reference structure information. The item analysis section 122 analyzes the linkbases 231 to 235 to extract the relationships between the items, and item information, such as a data type of an item, characterizing each item, from the schema. In the linkbases, the relationships between the items or link information of each item and related information are described. The item analysis section 122 analyzes the linkbases to extract the relationships between the items, and generates link structure information indicative of the relationships between the items. For example, the item analysis section 122 extracts presentational parent-child and sibling relationships between items based on the presentation link, and generates presentation link structure information. The item analysis section 122 extracts a calculation relationship between items based on the calculation link, and generates calculation link structure information. The item analysis section 122 extracts a semantic relationship between items based on the definition link, and generates definition link structure information. The item analysis section 122 extracts a name of each item based on the label link, and generates label link structure information. The item analysis section 122 extracts a resource corresponding to each item based on the reference link, and generates reference link structure information. Note that it is possible to generate link structure information for all of the linkbases, or a link structure may be generated by selecting some of the linkbases. Further, information related to the items is extracted from the schema 220. The schema 220 describes an element declaration (item name), type definition (type name), definitional contents, an appearance order of items, and so forth. The item analysis section 122 extracts these information items as features of each item, and records the same in the item and type information. Further, the item analysis section 122 extracts information, such as an item name, a value of the item, and an appearance order, defined in the instance document 210, and generates item value information. The link structure information, the item and type information, and the item value information are notified to the change information analysis section 130.

The change information analysis section 130 includes a document change detection section 131 and an item change detection section 132, and compares document data before a change and document data after the change to detect changed parts from differences. The document change detection section 131 compares document identifiers of documents before and after the change based on document reference structure information before the change and document reference structure information after the change, which were generated by the data structure analysis section 120. In the second embodiment, the document identifiers are document names (file names) of the instance document 210, the schema 220, and the linkbases 231 to 235. If the document identifiers of documents before and after the change match, these documents are associated with each other, and the document names of these documents are registered in matching information of a document reference structure comparison result 151. If a document name existing only in the XBRL data before the change is detected, the detected document name is registered in deleted information of the document reference structure comparison result 151. A document name existing only in the XBRL data after the change is registered in added information of the document reference structure comparison result 151. Note that the generated document reference structure comparison result 151 is the same as the file correspondence table in the first embodiment, which associates files before a change and files after the change. The item change detection section 132 compares item identifiers of items registered in item and type information before the change and item and type information after the change, which were generated by the data structure analysis section 120. If items having the same item identifier are detected, these items are associated with each other, and the item name is registered in matching information of an item and type information comparison result 152. If an item existing only in the XBRL data before the change is detected, the detected item is registered in deleted information of the item and type information comparison result 152. An item existing only in the XBRL data after the change is registered in added information of the item and type information comparison result 152. The item change detection section 132 further compares an item identifier of an item registered in item value information before the change and an item identifier of an item registered in item value information after the change. The item change detection section 132 associates the items having the same item identifier, and registers the item name in matching information of an item value comparison result 153. The item change detection section 132 extracts the item value before the change and the item value after the change, and records the same as the change contents. If an item existing only in the XBRL data before the change is detected, the detected item is registered in deleted information of the item value comparison result 153. An item existing only in the XBRL data after the change is registered in added information of the item value comparison result 153. Note that the generated item and type information comparison result 152 and item value comparison result 153 are the same as the item correspondence table in the first embodiment, which associates the files before and after the change.

The information matching section 140 includes a document matching section 141 and an item matching section 142, and associates unassociated documents and unassociated items, which have not been associated by the change information analysis section 130. The document matching section 141 associates documents registered by the change information analysis section 130 as the deleted information in the document reference structure comparison result 151 (hereinafter referred to as the deleted documents) and documents registered as the added information (hereinafter referred to as the added documents). The document matching section 141 extracts document reference structures of the deleted documents and the added documents from the document reference structure information. For example, the document matching section 141 checks the names of documents having a parent-child or sibling relationship with a deleted document against the names of documents having a parent-child or sibling relationship with an added document, and determines whether or not there are common document names between them. If all of the checked document names match, it is determined that the parents are a common document, and the deleted document and the added document are associated with each other and are registered in the matching information of the document reference structure comparison result 151. Further, the registrations of these documents are deleted from the deleted information and the added information. The item matching section 142 associates items registered as the deleted information (hereinafter referred to as the deleted items) and items registered as the added information (hereinafter referred to as the added items) in the item and type information comparison result 152 and the item value comparison result 153. The item matching section 142 extracts the link structure information of a deleted item and an added item, and checks a parent-child or sibling relationship of the links of the deleted item and a parent-child or sibling relationship of the added item, to thereby determine whether or not the parent-child or sibling relationship is common. If it is determined that the parent-child or sibling relationship is common, the deleted item and the added item are associated and are registered in the matching information of the item and type information comparison result 152 and the item value comparison result 153. Further, the registrations of these items are deleted from the deleted information and the added information. Note that the XBRL data has a plurality of link structures. For example, the parent-child relationship or sibling relationship in the presentation link, the calculation link, and the definition link has an accounting meaning, and hence the same relationship is often described between items. Therefore, if the relationship between items match in the presentation link, the calculation link, and the definition link, it is possible, in most cases, to consider that the items match. Further, candidates for a matching item are detected for a plurality of link structures in advance, and a probability of a candidate is set to 10 when the candidate is detected for one link structure, whereby the probability is calculated for each candidate. For example, when a candidate for a matching item is detected in the presentation link, the calculation link, and the definition link, the candidate has a probability of 10 + 10 + 10 = 30. Note that the probability may be set to the same value in all of the link structures, or may be changed according to a kind of the link structure. Further, a learning function may be provided to vary the probability set for each link structure, as appropriate.

The storage section 150 stores, as change information, comparison result information obtained by comparing the XBRL data before the change and the XBRL data after the change. In the document reference structure comparison result 151, the correspondence relationship between the documents before and after the change detected by the document change detection section 131 and the document matching section 141 is set. In the item and type information comparison result 152, the correspondence relationship between the items before and after the change detected by the item change detection section 132 and the item matching section 142 is set. In the item value comparison result 153, the correspondence relationship between the items before and after the change detected by the item change detection section 132 and the item matching section 142 is set together with the item values.

The analysis processing executed by the analysis apparatus 100 configured as above will be described using an example of the XBRL data. Designation of the documents to be compared is input from the terminal apparatus 40 to the analysis apparatus 100 via the keyboard 22, the mouse 23, or the network 30. Instance documents or schemata before and after the change are designated as objects to be compared. It is assumed here that an instance document of a 2007 annual report is designated as a document before the change, and an instance document of a 2008 annual report is designated as a document after the change. Of course, the objects to be compared may be schemata. Further, when a linkbase is designated, the entire document reference structure may be analyzed to detect a schema which is not linked as a root.

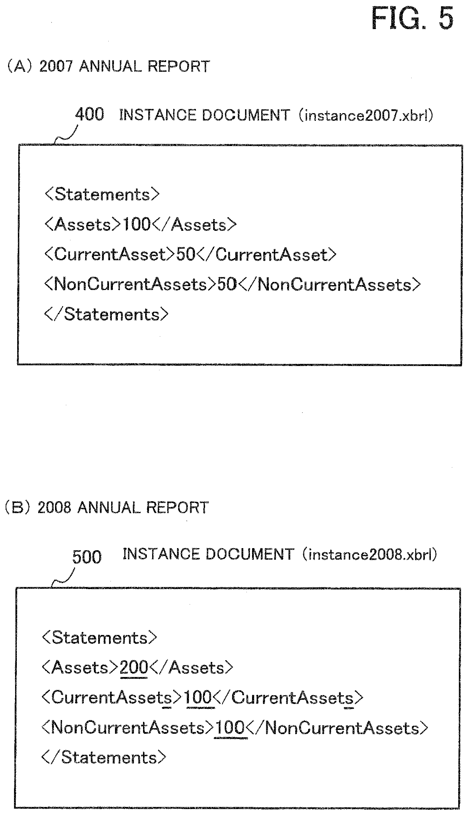

FIG. 5 illustrates an example of the instance document of the report, in which (A) illustrates the 2007 annual instance document (instance2007.xbrl), and (B) illustrates the 2008 annual instance document (instance2008.xbrl). Note that the file name (document name) of the instance document is indicated in parentheses.

The (A) 2007 annual instance document (instance2007.xbrl) 400 describes three items and item values of the three items. The item value of the item "Assets" is set to "100", the item value of the item "CurrentAsset" is set to "50", and the item value of the item "NonCurrentAssets" is set to "50". In the (B) 2008 annual instance document (instance2008.xbrl) 500, similarly, item values are set for three items such that the item value of the item "Assets" is set to "200", the item value of the item "CurrentAssets" is set to "100", and the item value of the item "NonCurrentAssets" is set to "100".

For example, when simple matching processing is executed, the item "Assets" and the item "NonCurrentAssets" in the 2007 annual instance document 400 and the item "Assets" and the item "NonCurrentAssets" in the 2008 annual instance document 500 are identical in identifier, and hence it is understood that these are the same items. However, it is not understood whether or not the item "CurrentAsset" in the 2007 annual instance document 400 and the item "CurrentAssets" in the 2008 annual instance document 500 are the same items.

The analysis apparatus 100 compares the 2007 annual report and the 2008 annual report, and analyzes changed parts and the change contents. The data structure analysis section 120 reads out the designated 2007 annual instance document 400 and taxonomy documents (a schema and linkbases) related to the instance document 400 from the XBRL data storage device 110. Similarly, the data structure analysis section 120 reads out the 2008 annual instance document 500 and taxonomy documents related to the instance document 500 from the XBRL data storage device 110.

The document reference structure analysis section 121 analyzes the reference relationships between the documents of the read 2007 annual report and the reference relationships between the documents of the read 2008 annual report, and detects reference structures between the documents. For example, the document reference structure analysis section 121 analyzes the read schema, and detects linkbases which the schema refers to as documents having a parent-child relationship with the schema. Note that it is possible to define not only a usual taxonomy but also an extension taxonomy in the XBRL data. When the extension taxonomy is included in the object XBRL data, the reference structure between the documents is analyzed including extension taxonomy documents. Thus, the reference structures between the documents of the 2007 annual report before the change and the documents of the 2008 annual report after the change are grasped, respectively.

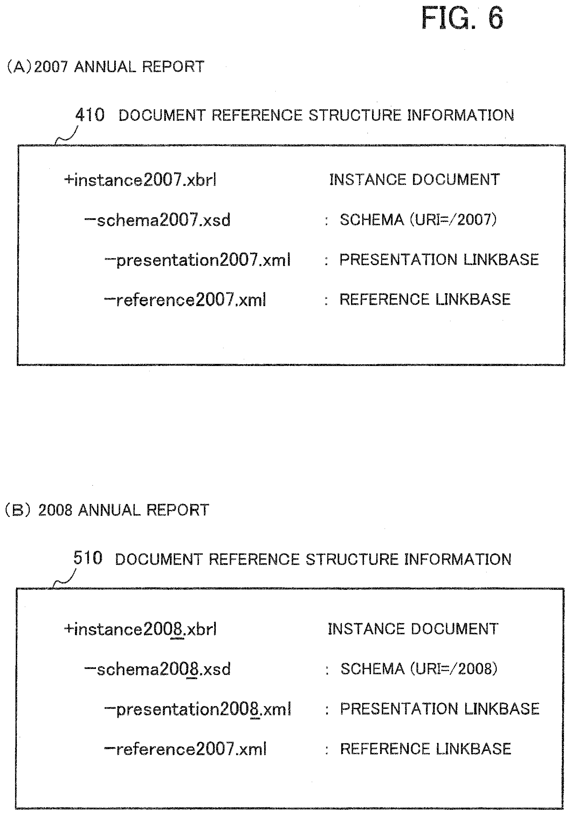

FIG. 6 illustrates an example of document reference structure information of XBRL data, in which (A) illustrates the document reference structure information of the 2007 annual report, and (B) illustrates the document reference structure information of the 2008 annual report. FIG. 6 illustrates tree structures of the detected reference relationships. Further, an underline under a character in (B) indicates a part different from the description in (A), and is not included in the actual XBRL data. The same mark is also used in the following drawings.

The document reference structure information 410 in the (A) 2007 annual report indicates the document structure of the XBRL data of the 2007 annual report. The schema "schema2007.xsd" associated with the instance document "instance2007.xbrl" 400 is a root of the taxonomy documents. FIG. 6 illustrates that the instance document "instance2007.xbrl" is a root of the reference structure. Note that the root is a document which is not linked by other documents. The XBRL data of the 2007 annual report has the reference structure in which the instance document "instance2007.xbrl" refers to the schema "schema2007.xsd", and further, the schema "schema2007.xsd" refers to the presentation link "presentation2007.xml" and the reference link "reference2007.xml". The document reference structure information 510 in the (B) 2008 annual report indicates the document structure of the XBRL data of the 2008 annual report. The instance document "instance2008.xbrl" is a root of the reference structure. The XBRL data of the 2008 annual report has the reference structure in which the instance document "instance2008.xbrl" refers to the schema "schema2008.xsd", and further, the schema "schema2008.xsd" refers to the presentation link "presentation2008.xml" and the reference link "reference2007.xml". The document reference structure information 410 and 510 are notified to the change information analysis section 130. Further, document reference structure information may be reported to a user e.g. by displaying the document reference structure on the monitor 21 via the change information analysis section 130 or may be transmitted to the terminal apparatus 40 to cause the terminal apparatus 40 to display the document reference structure.

Subsequently, the data structure analysis section 120 analyzes the schema and the linkbases of the respective XBRL data to extract item identifiers, type information, and item values of items included in the XBRL data, and analyzes a link structure in which items are associates the other items and information data.

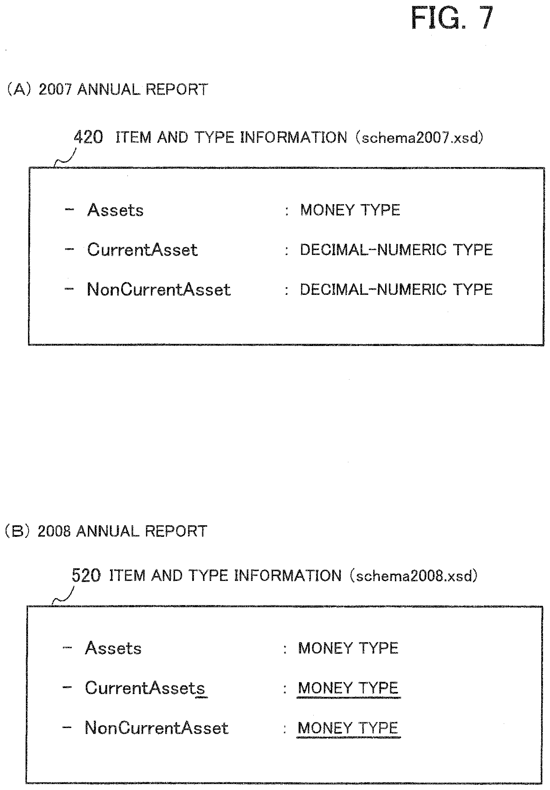

FIG. 7 illustrates an example of item and type information extracted from a schema, in which (A) illustrates item and type information (shcema2007.xsd) of the 2007 annual report, and (B) illustrates item and type information (shcema2008.xsd) of the 2008 annual report. Note that a document name in parentheses is a file name of a schema referred to.

An identifier and a type of each item are defined in the schema in the XML format. The item analysis section 122 analyzes this to generate item and type information. In item and type information (shcema2007.xsd) 420 of the (A) 2007 annual report, there is registered item and type information that the type of "Assets" is "money type", the type of "CurrentAsset" is "decimal-numeric type", and the type of "NonCurrentAssets" is "decimal-numeric type". In item and type information (shcema2008.xsd) 520 of the (B) 2008 annual report, there is registered item and type information that the type of the item "Assets" is "money type", the type of the item "CurrentAssets" is "money type", and the type of "NonCurrentAssets" is "money type".

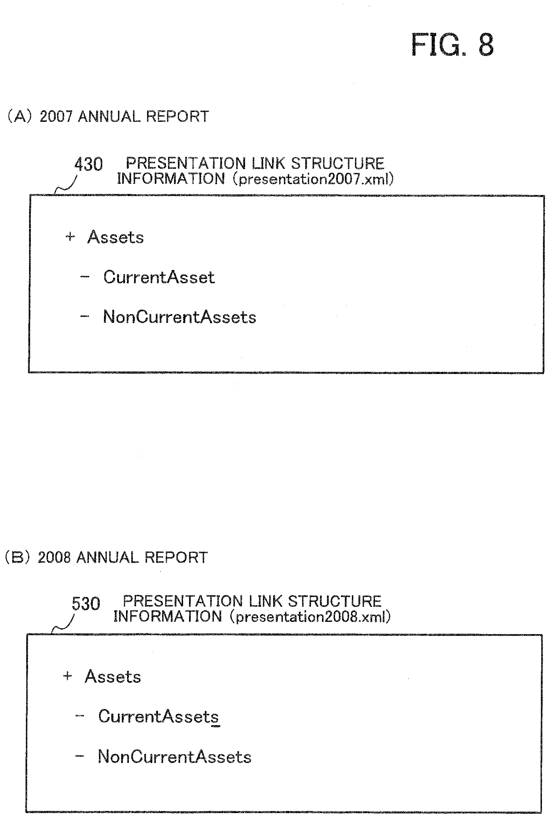

FIG. 8 illustrates an example of presentation link structure information, in which (A) illustrates presentation link structure information (presentation2007.xml) of the 2007 annual report, and (B) illustrates presentation link structure information (presentation2008.xml) of the 2008 annual report. Note that a document name in parentheses is a file name of a presentation link referred to.

A presentation order and a parent-child relationship of each item are defined in the presentation link in the XML format. The item analysis section 122 analyzes this to generate presentation link structure information. The presentation link structure information (presentation2007.xml) 430 of the (A) 2007 annual report indicates that "Assets", "CurrentAsset", and "NonCurrentAssets" have a parent-child relationship in presentation, and further indicates that as to the presentation order of "CurrentAsset" and "NonCurrentAssets", "CurrentAsset" is first presented. The presentation link structure information (presentation2008.xml) 530 of the (B) 2008 annual report indicates that "Assets", "CurrentAssets", and "NonCurrentAssets" have a parent-child relationship in presentation, and further indicates that as to the presentation order of "CurrentAssets" and "NonCurrentAssets", CurrentAssets" is first presented.

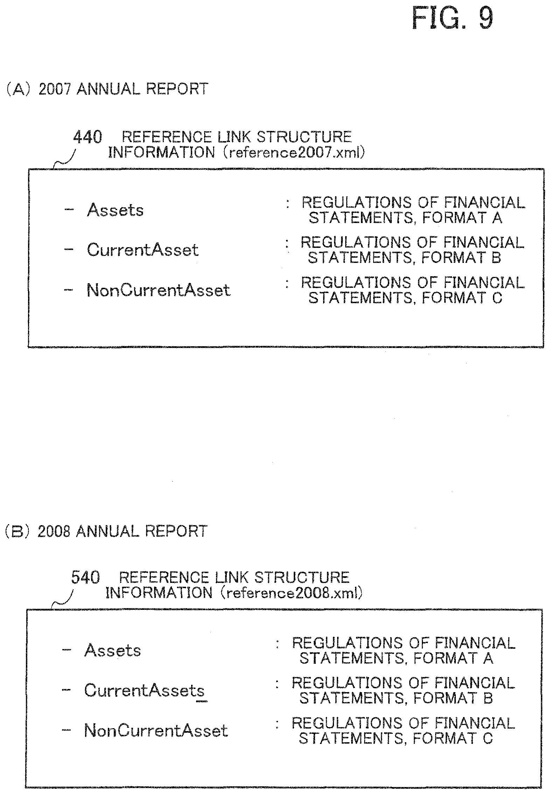

FIG. 9 illustrates an example of the reference link structure information, in which (A) illustrates the reference link structure information (reference2007.xml) of the 2007 annual report, and (B) illustrates the reference link structure information (reference2008.xml) of the 2008 annual report. Note that a document name in parentheses is a file name of a reference link referred to.

Literature information as a basis of definition of each item is defined in a reference link. The item analysis section 122 analyzes the defined information to generate presentation link structure information. The reference link structure information (reference2007.xml) 440 of the (A) 2007 annual report indicates that the reference literature of "Assets" is "Regulations of Financial Statements, Format A", the reference literature of "CurrentAsset" is "Regulations of Financial Statements, Format B", and the reference literature of "NonCurrentAssets" is "Regulations of Financial Statements, Format C". The reference link structure information (reference2008.xml) 540 of the (B) 2008 annual report indicates that the reference literature of "Assets" is "Regulations of Financial Statements, Format A", the reference literature of "CurrentAssets" is "Regulations of Financial Statements, Format B", and the reference literature of "NonCurrentAssets" is "Regulations of Financial Statements, Format C".

Although in the above-described process, the description has been given of the presentation link and the reference link, link structure analysis may be similarly performed on the calculation link, the definition link, and the label link, as well, to generate the link structure information. Further, the link structure information may be generated by selectively using links with a high probability. The probability means the probability as a basis for associating items, and as the probability is higher, there is a higher possibility that associated items are the same item.

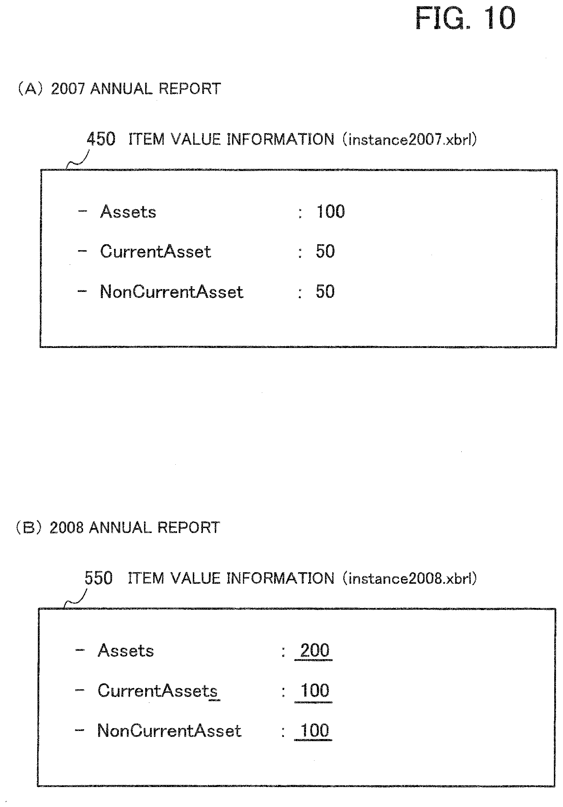

FIG. 10 illustrates an example of item value information, in which (A) illustrates the item value information (instance2007.xml) of the 2007 annual report, and (B) illustrates item value information (instance2008.xml) of the 2008 annual report. Note that a document name in parentheses is a file name of an instance document from which the information is extracted.

In the instance documents 400 and 500, the values of the items are defined. The item analysis section 122 extracts values of items to generate item value information. The item value information (instance2007.xml) 450 of the (A) 2007 annual report indicates that the item value of "Assets" is "100", the item value of "CurrentAsset" is "50", and the item value of "NonCurrentAssets" is "50". The item value information (instance2008.xml) 550 of the (B) 2008 annual report indicates that the item value of "Assets" is "200", the item value of "CurrentAssets" is "100", and the item value of "NonCurrentAssets" is "100".

The thus generated document reference structure information 410 and 510, item and type information 420 and 520, presentation link structure information 430 and 530, reference link structure information 440 and 540, and item value information 450 and 550 are sent to the change information analysis section 130.

The change information analysis section 130 compares the XBRL data before the change and the XBRL data after the change to detect changed parts and the change contents. In this example, the change information analysis section 130 performs the analysis processing using the document reference structure information 410 and 510, the item and type information 420 and 520, the presentation link structure information 430 and 530, the reference link structure information 440 and 540, and the item value information 450 and 550, which have been acquired from the data structure analysis section 120. In the following description, the 2007 annual report is described as the data before the change, and the 2008 annual report is described as the data after the change for the sake of simplicity.

The document change detection section 131 compares document identifiers (file names) based on the document reference structure information 410 and 510. The instance documents or schemata before and after the change as objects to be compared are designated by the user. As a result, the designated document names before and after the change and the name space URIs of the schemata are subjected to matching. For example, when the schema "schema2007.xsd" before the change and the schema "schema2008.xsd" after the change are designated by the user, the document names of the schemata are recorded in the document reference structure comparison result as matching information. Further, "/2007" and "/2008" as name space URIs are also recorded as matching information. Similarly, the instance document "instance2007.xbrl" before the change and the instance document "instance2008.xbrl" after the change are also recorded as matching information.

Further, the document reference structure information 410 before the change and the document reference structure information 510 after the change are compared sequentially according to the data structure. Next to the instance documents and the schemata, the presentation links which the schemata refer to are compared. Although the presentation link before the change is "presentation2007.xml", and the presentation link after the change is "presentation2008.xml", which match, it is assumed here for the sake of explanation that it is determined that the presentation links do not match. Next, both of the reference links before and after the change are "reference2007.xml", and it is determined that the reference links are matching information.

Note that although in the above description, the description has been given of a case where comparison is performed with respect to the instance documents and the taxonomy documents, comparison may be performed only using the taxonomy documents.

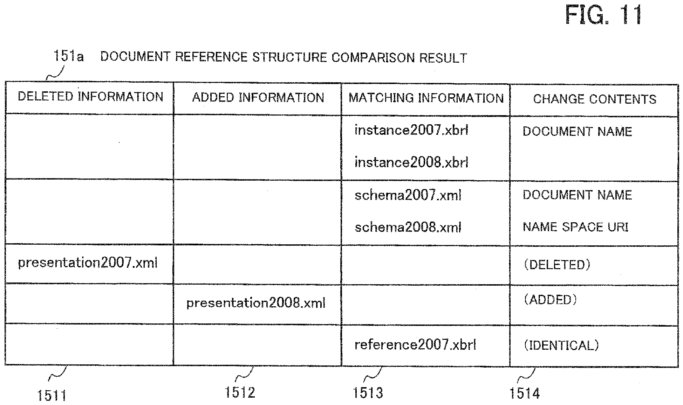

FIG. 11 illustrates a document reference structure comparison result obtained after execution of change information-analyzing processing. The document reference structure comparison result 151a is a result obtained by comparing the documents before and after the change based on the document identifiers by the document change detection section 131.

The document reference structure comparison result 151a records deleted information 1511, added information 1512, matching information 1513, and change contents 1514. A name (identifier) of information which exists in the XBRL data before the change but does not exist in the XBRL data after the change is set in the deleted information 1511. On the contrary, a name (identifier) of information which does not exist in the XBRL data before the change but exists in the XBRL data after the change is set in the added information 1512. A name (identifier) of information which exists both in the XBRL data before the change and the XBRL data after the change is set in the matching information 1513. A change content is set in the change contents 1514. In the document reference structure comparison result 151a, the instance document "instance2007.xbrl" before the change and the instance document "instance2008.xbrl" after the change, the schema "schema2007.xsd" before the change and the schema "schema2008.xsd" after the change, and the same reference link "reference2007.xml" before and after the change are registered in the matching information 1513. Further, in the change contents 1514, it is recorded that a name space URI of the document names of the instance document and the schema has been changed. The presentation links "presentation2007.xml" and "presentation2008.xml" which have not been associated are registered in the deleted information 1511 and the added information 1512, respectively.

The item change detection section 132 compares the item identifiers (item names) of the XBRL data before the change and the XBRL data after the change based on the item and type information 420 and 520. "Assets" and "NonCurrentAsset" in the item and type information 420 before the change also exist in the item and type information 520 after the change. Therefore, "Assets" and "NonCurrentAsset" are determined to be matching information. "CurrentAsset" exists only in the item and type information 420 before the change, and hence is determined to be deleted information. Further, the item "CurrentAssets" exists only in the item and type information 520 after the change, and hence is determined to be added information.

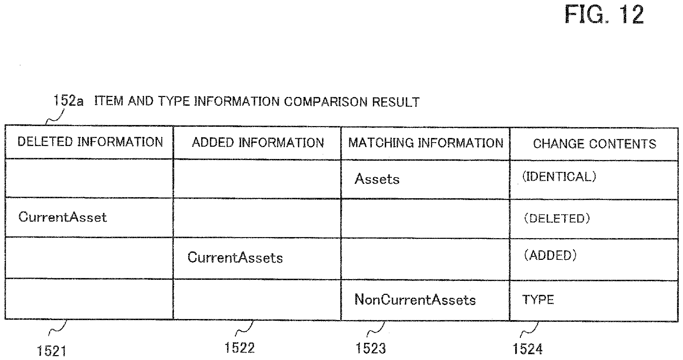

FIG. 12 illustrates an item and type information comparison result obtained after execution of changed information analysis processing. The item and type information comparison result 152a is a result obtained by comparing the items in the item and type information 420 and 520 before and after the change based on the item identifiers by the item change detection section 132.

The item and type information comparison result 152a includes columns for registering deleted information, added information, matching information, and change contents. The columns are the same as the document reference structure comparison result 151a in FIG. 11, and hence description thereof is omitted. As described above, "Assets" and "NonCurrentAssets" which are determined by the item change detection section 132 that the identifiers of the items match between the XBRL data before the change and the XBRL data after the change are registered in matching information 1523. Further, analysis processing is performed to check whether or not the description in the schema is changed with respect to an item registered as matching information. "NonCurrentAssets" has been changed in type from "decimal-numeric type" to "money type", and hence the fact that the type has been changed is recorded in the change contents 1524. Further, "CurrentAsset" which exists only in the item and type information 420 before the change is registered in the deleted information 1521. Further, "CurrentAssets" which exists only in the item and type information 520 after the change is registered in the added information 1522.

The item change detection section 132 further compares item identifiers (item names) of the XBRL data before the change and the XBRL data after the change with respect to the item value information 450 and 550. "Assets" and "NonCurrentAssets" in the item value information 450 before the change also exist in the item value information 550 after the change. Therefore, "Assets" and "NonCurrentAssets" are determined to be matching information. "CurrentAsset" exists only in the item value information 450 before the change, and hence is determined to be deleted information. Further, "CurrentAssets" exists only in the item value information 540 after the change, and hence is determined to be added information.

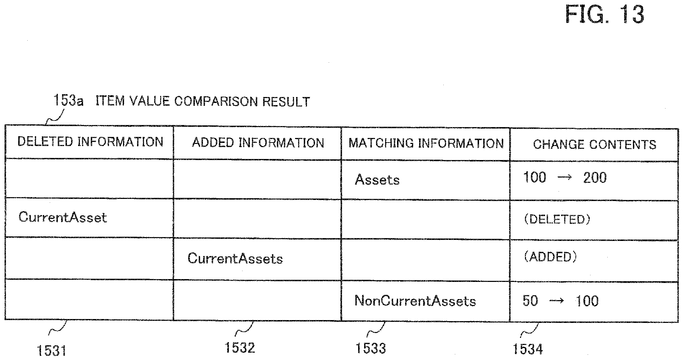

FIG. 13 illustrates an item value comparison result obtained after execution of changed information analysis processing. The item value comparison result 153a is a result obtained by comparing the items in the item value information 450 and 550 before and after the change based on the item identifiers by the item change detection section 132.

The item value comparison result 153a includes columns for registering deleted information, added information, matching information, and change contents. The columns are the same as the document reference structure comparison result 151a in FIG. 11, and hence description thereof is omitted. As mentioned above, "Assets" and "NonCurrentAssets", which are determined by the item change detection section 132 that the identifiers of the items match, are registered in the matching information 1533. Further, analysis processing is performed on the items registered as the matching information to check whether or not the description in the instance document has been changed. "Assets" has been changed in item value from "100" to "200", and hence the change is recorded in the change contents 1534. "NonCurentAssets" has been changed in item value from "50" to "100", and hence similarly, the change is recorded in the change contents 1534. Further, "CurrentAsset" which exists only in the item value information 450 before the change is registered in the deleted information 1531. Further, "CurrentAssets" which exists only in the item value information 550 after the change is registered in the added information 1532. Note that the deleted information, the added information, and the matching information in the item value comparison result 153a are the same as those in the item and type information comparison result 152a. Therefore, only changes in the matching information may be extracted and registered.

By executing the above-described processing, association of information data before and after the change is performed on the information data of the XBRL documents and the items of the XBRL documents, based on the respective identifiers. Then, information data is classified as one of the deleted information which exists only in the XBRL data before the change, the added information which exists only in the XBRL data after the change, and the matching information which exists in the XBRL data before and after the change. Further, the matching information which remains unchanged before and after the change is subjected to processing for analyzing the change contents before and after the change, and a result of the analysis processing is recorded as the change contents. The thus generated document reference structure comparison result 151, the item and type information comparison result 152, and the item value comparison result 153 are stored in the storage section 150, and are passed to the information matching section 140.

The information matching section 140 performs matching processing on the XBRL documents and items which could not be associated in the change information analysis section 130, based on the document reference structure comparison result 151, the item and type information comparison result 152, and the item value comparison result 153.

The document matching section 141 associates the XBRL documents before the change and the XBRL documents after the change, which have not been associated, based on the document reference structure comparison result 151. In the document reference structure comparison result 151a illustrated in FIG. 11, the presentation link "presentation2007.xml" as the deleted information, and the presentation link "presentation2008.xml" as the added information are left unassociated. The document matching section 141 analyzes equivalence (probability of being identical) between the presentation links "presentation2007.xml" and "presentation2008.xml" based on the document reference structure information 410 and 510. For example, the document reference structure information 410 describes that the schema "schema2007.xsd" before the change refers to the presentation link "presentation2007.xml". Similarly, the document reference structure information 510 describes that the schema "schema2008.xsd" after the change refers to the presentation link "presentation2008.xml. From the fact that the both of them refer to only one presentation link, it is presumed that the "presentation2007.xml" and "presentation2008.xml" are matching information. It is also possible to request the user to confirm whether or not the correspondence relationship is correct. For example, the matching information is presented to the monitor 21 or the terminal apparatus 40 so as to report to the user and acquire user's confirmation. If the user confirms that the correspondence relationship is correct, the presentation links are registered in the document reference structure comparison result 151a as matching information. If the user does not confirm that the correspondence relationship is correct, the presentation links are registered in the deleted information and the added information of the document reference structure comparison result 151a, respectively, as unmatching information. Further, it is possible to prompt the user to correct the information on an as-needed basis, after reporting to the user that the presentation links are matching information.

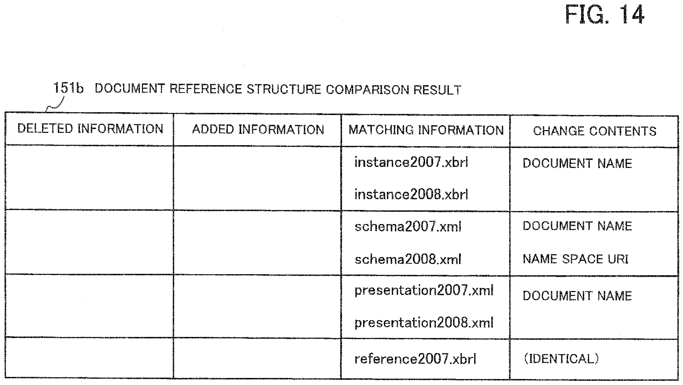

The document reference structure comparison result is illustrated which is obtained when it is confirmed by the user that the association of the "presentation2007.xml" before the change and "presentation2008.xml" after the change is correct. FIG. 14 illustrates the document reference structure comparison result obtained after execution of information matching processing.

In the document reference structure comparison result 151b, the presentation link "presentation2007.xml" before the change registered in the deleted information and the presentation link "presentation2008.xml" after the change registered in the added information are registered in the matching information. Further, the change information analysis section 130 performs change contents analysis processing on the XBRL documents newly registered as the matching information. As for the presentation link "presentation2007.xml" before the change and the presentation link "presentation2008.xml" after the change, the document name is changed and hence the "document name" is registered in the change contents.

As described above, even when the XBRL document name is changed, by associating a pair of XBRL documents semantically equivalent to each other, based on the reference relationships between the XBRL documents, the user can grasp an XBRL document before the change and an XBRL document after the change. This eliminates the need of performing the operation of finding matching documents before and after the change, out of a lot of XBRL documents, which improves user's work efficiency.

Next, the item matching section 142 performs analysis of equivalency of unassociated items, based on the item and type information comparison result 152a and the item value comparison result 153a. The item matching section 142 analyzes equivalency of items based on the link structure information detected by the item analysis section 122.

Here, a description will be given of a case where unassociated items in the item and type information comparison result 152a are associated based on the presentation link structure information 430 and 530, illustrated in FIG. 8, by way of example. In the presentation link, the calculation link, and the definition link, it is possible to match items in order of linking of defined items. For example, in the presentation link structure information 430 before the change, "CurrentAsset" and "NonCurrentAssets" are linked in the mentioned order as children of "Assets". Of these items, "CurrentAsset" is deleted information. On the other hand, in the presentation link structure information 530 after the change, "CurrentAssets" and "NonCurrentAssets" are linked in the mentioned order as children of "Assets". Therefore, it is possible to presume from the parent-child or sibling relationship of linking that "CurrentAsset" and "CurrentAssets" are matching information. Further, it is also possible to associate items by executing similar processing based on the parent-child or sibling relationship in the calculation link or the parent-child or sibling relationship in the definition link. As mentioned above, the parent-child or sibling relationships in the presentation link, the calculation link, and the definition link often match. Then, if it is possible to perform the same association between items not only from the presentation link but also from the calculation link and the definition link, there is a higher probability of the items being matching information.

Further, it is also possible to match items based on the contents of resources of items defined by the label link and the reference link. For example, a case where matching is performed based on the reference link structure information 440 and 540 generated from the reference link of the above-mentioned XBRL data will be described. "Regulations of Financial Statements, Format B" is set in "CurrentAsset" in the reference link structure information 440 before the change as a resource of the reference link. Similarly, "Regulations of Financial Statements, Format B" is also set in "CurrentAssets" in the reference link structure information 540 after the change as a resource of the reference link. The resources as a basis of the items match, and hence it is possible to presume that "CurrentAsset" and "CurrentAssets" are matching information. The label link and the reference link associate laws, literatures, etc. as a basis of item names and items. Therefore, the fact that the resources match means, in most cases, that the items match.

Further, it is also possible to obtain auxiliary information for matching items, from the order of definition of items defined by the schema. Let it be assumed, for example, that "Asset", "CurrentAsset", and "NonCurrentAssets" are defined in the mentioned order in the schema before the change. Similarly, let it be assumed that "Asset", "CurrentAssets", and "NonCurrentAssets" are defined in the mentioned order in the schema after the change. In this case, it is possible to presume from the definition order that "CurrentAsset" and "CurrentAssets" are matching information. However, although in general, the order is not changed due to a change, the definition order of items in the schema has no meaning, and hence the definition order is used as auxiliary information.

As mentioned above, it is possible to presume association of items from the definition order of items in the linkbases or schemata or the like, each having different definition contents. Therefore, there can be a case where a plurality of candidates occur for pairing of items that are presumed to be matching information. If there are a plurality of candidates for the matching information, the total probability is calculated by weighting the probability according to the type of a linkbase or the like. For example, the probabilities of a candidate presumed to be matching information based on the presentation link structure, the calculation link structure, and the definition link structure, respectively, is set to 10, and the probabilities of a candidate presumed to be matching information based on the label link structure and the reference link structure is set to 20. Further, the probability of a candidate presumed to be matching information based on a definition order in the schemata, which is auxiliary, is set to 1. Then, the probability of association of an unassociated item before the change and an unassociated item after the change is calculated in the order of the presentation link structure, the calculation link structure, the definition link structure, the label link structure, the reference link structure, and the definition order in the schemata, and a total of calculated values is set as the total probability. Details will be described hereinafter.

By presenting a candidate for matching information to the monitor 21 or the terminal apparatus 40 to report to the user, whether or not the thus detected candidate for matching information is correct may be acquired from the user. If the number of candidates is one, this candidate is presented to the user to acquire a confirmation. If the user confirms that the candidate is correct, the candidate is registered in the item and type information comparison result 152b as matching information. If the user confirms that the candidate is not correct, the registrations of deleted information and added information in the item and type information comparison result 152a as unmatching information are maintained. If there are a plurality of candidates for matching information, they are presented in the decreasing order of probability. Further, it is also possible to prompt the user to correct the information, on an as-needed basis, after reporting to the user as matching information.

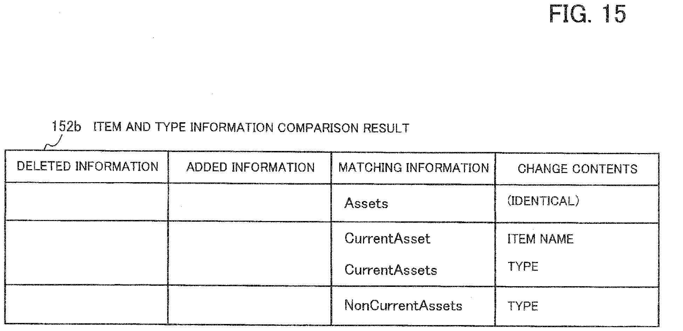

As a result of the above-described item matching processing, the item and type information comparison result is updated. FIG. 15 illustrates the item and type information comparison result obtained after execution of the information matching processing.

In the item and type information comparison result 152b, "CurrentAsset" and "CurrentAssets" associated by the item matching section 142 are recorded as the matching information. Further, the result of analysis of change contents after matching processing, executed by the change information analysis section 130, is reflected on the change contents. In addition to the changes in the item name, by comparing the definitions of the corresponding items in the item and type information 420 before the change and the item and type information 520 after the change, the changes in the type are recorded.

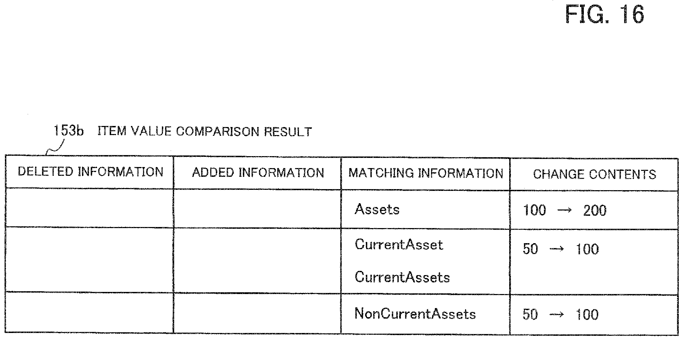

The item matching section 142 executes similar information matching processing also on the item value comparison result 153a. Then, the item matching section 142 detects that "CurrentAsset" in the item value information 450 before the change and "CurrentAssets" in the item value information 550 after the change are matching information. Note that the item value comparison result 153a may be updated by causing the item and type information comparison result 152b obtained after execution of the information matching processing to be reflected thereon. FIG. 16 illustrates the item value comparison result obtained after execution of the information matching processing.

In the item value comparison result 153b, "CurrentAsset" and "CurrentAssets" associated by the item matching section 142 are recorded as matching information. Further, the change information analysis section 130 records the item value "50" of "CurrentAsset" in the item value information 450 before the change and the item value "100" of "CurrentAssets" in the item value information 550 after the change, in the change contents.

As described above, it is possible to automatically perform association of changed items and comparison of values of the items before and after the change also with respect to items before and after the change which are different in identifier.

Now, a description will be given of calculation of probability of a candidate for matching information. As described above, in the item information matching processing, a plurality of candidates for matching information are sometimes detected according to the link type. To cope with this, a total probability is calculated by weighting a probability according to the link type or the like. Further, the weighting of the probability according to the link type may be designated in advance, or the definition thereof may be changed by learning according to selection by users in the past.

Hereinafter, the learning of the probability will be described based on an example. It is assumed that items "A1", "B1", and "C1" are set in the schema before the change, and items "A2", "B2", and "C2" are set in the schema after the change. In the items, "A1", "B1", and "C1" are associated with "A2", "B2", and "C2", respectively. In this example, the definition order in the schema is omitted.

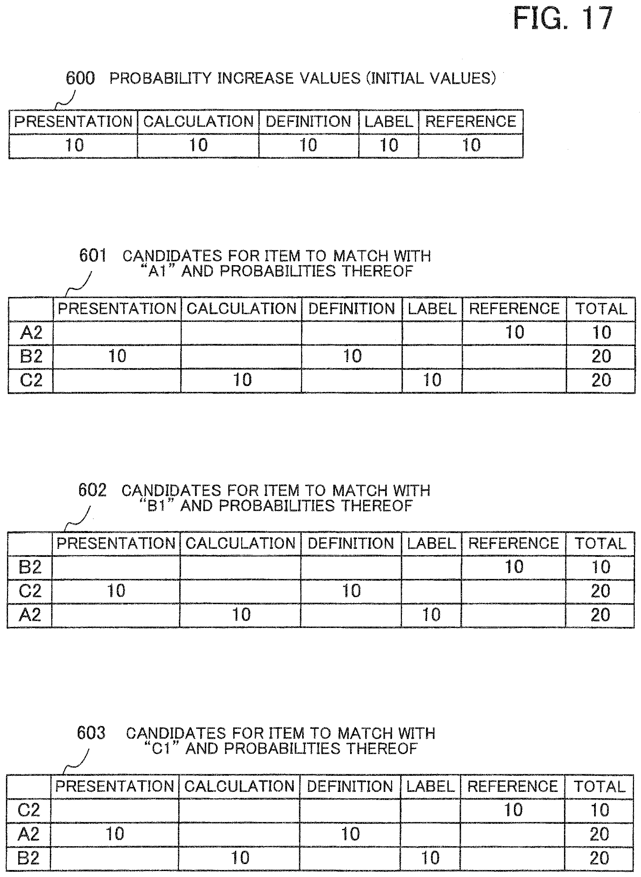

FIG. 17 illustrates candidates for a matching item and probabilities of the candidates. The "presentation", "calculation", "definition", "label", and "reference" in the tables each indicate a link as a basis of candidacy.

Probability increase values (initial values) 600 indicate bases of candidacy (link types) and increase values of the probability of a candidate.

Candidates for an item to match with "A1" and probabilities thereof 601 indicate probabilities of matching between "A1" and items after the change "A2", "B2", and "C2" to match with "A1", calculated on a link type basis. The same applies to candidates for an item to match with "B1" and probabilities thereof 602, and candidates for an item to match with "C1" and probabilities thereof 603.

For example, in the candidates for an item to match with "A1" and probabilities thereof 601, "B2" is selected for the presentation link, "C2" for the calculation link, "B2" for the definition link, "C2" for the label link, and "A2" for the reference link, as candidates, and probabilities are set for the candidates, respectively. In the candidates for an item to match with "B1" and probabilities thereof 602, "C2" is selected for the presentation link, "A2" for the calculation link, "C2" for the definition link, "A2" for the label link, and "B2" for the reference link, as candidates, and probabilities are set for the candidates, respectively. In the candidates for an item to match with "C1" and probabilities thereof 603, "A2" is selected for the presentation link, "B2" for the calculation link, "A2" for the definition link, "B2" for the label link, and "C2" the reference link, as candidates, and probabilities are set for the candidates, respectively.

The most probable candidate to match with "A1" is "B2" or "C2", which is high in total value from the above table, and is presented to the user. However, "A2" actually matches with "A1", and hence the user selects "A2" as a matching item. To the information matching section 140, "A2" is reported as a correct matching item. Hence, the information matching section 140 increases the increase value of the probability in the reference link serving as a basis of the correct matching item from 10 to 20. Since only the reference link is the basis of the correct matching item, the probability is increased only in the reference link. If there are a plurality of bases, the increase value of the probability is increased with respect to all of the bases.

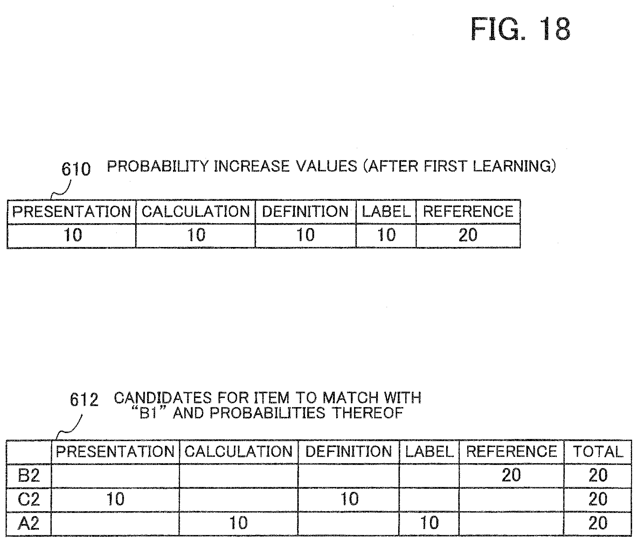

FIG. 18 illustrates probabilities after first learning, and candidates for an item to match and probabilities of the candidates. In probability increase values after first learning 610, the probability increase value for the reference link is increased from 10 to 20. Then, the candidates for an item to match with "B1" and probabilities thereof 602 are changed in values as indicated in the candidates for an item to match with "B1" and probabilities thereof 612.

The most probable candidate to match with the item "B1" is "B2", "C2", or "A2", which is high in total value, from the above table, and is presented to the user. Actually, "B2" matches with "B1", and hence the user selects "B2" as a matching item. To the information matching section 140, "B2" is reported as a correct matching item. Hence, the information matching section 140 increases the increase value of the probability in the reference link serving as a basis of the correct matching item from 20 to 30.

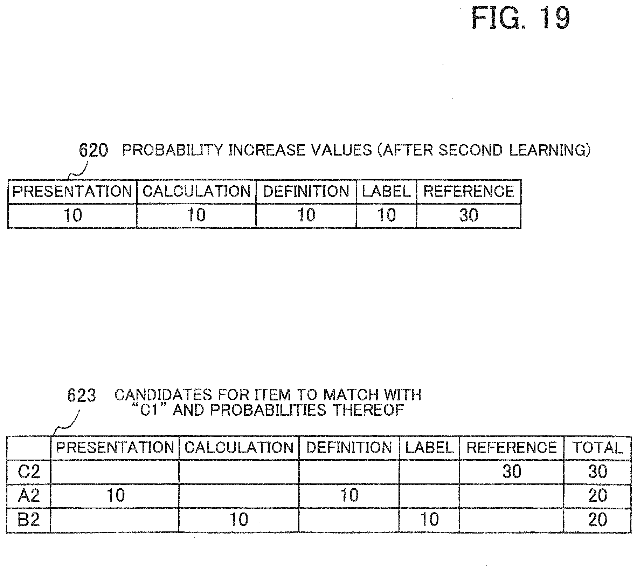

FIG. 19 illustrates probabilities after second learning, and candidates for an item to match and probabilities of the candidates. In probability increase values after second learning 620, the probability increase value in the reference link is increased from 20 to 30. Then, the candidates for an item to match with "C1" and probabilities thereof 603 are changed in values as indicated in candidates for an item to match with "C1" and probabilities thereof 623. As a result, the most probable candidate for an item to match with the item "C1" is only "C2" which is high in total value from the above table, and "C2" actually matching with "C1" is selected.

Learning makes "C2", which is not the most probable candidate before execution of the learning, the only most probable candidate.

Note that when a matching item is selected by the user, a degree of increase in the probability increase value is freely determined according to a system or data. Further, the probability increase value may be increased not every time, but in specified timing by accumulating the selection results. Alternatively, the probability increase value may be reduced with respect to a basis of candidacy which is not selected by the user. Further, if no matching item exists in the candidates and the user has not performed selection itself, the probability increase value may be reduced with respect to the bases of all of the candidates. Further, it is not necessary to always execute the learning, and the stop and restart of the learning may be controlled according to the status of the system or data, or a user's request. The probability increase values may be initialized in certain timing, and it is possible to set initial values of the probability increase values as desired.

As described above, by executing the learning of the matching, it is possible to execute matching processing according to a type and a tendency in the change of the XBRL data, which makes it possible to obtain a comparison result high in accuracy.

By the way, one of the features of XBRL includes an extension taxonomy function which extends a taxonomy without changing an existing schema or linkbases. For example, let it be assumed that an item "Cash" is desired to be added as a child of the presentation link of the item "CurrentAsset" in the instance document 400 before the change illustrated in FIG. 5. In such a case, as extension taxonomies, there are generated an extension schema (schema-ext.xsd) which defines an item to be added, an extension presentation link (presentation-ext.xml) which defines a display position of an item, and an extension label link (label-ext.xml) which defines a name of an item. By configuring such that the extension schema (schema-ext.xsd) refers to the schema (schema2007.xsd) of the base taxonomy as a basis, it is possible to add a new item without changing the contents of the schema before the change.

In the instance document 500 after the change, an item having the same meaning is changed to "CurrentAssets". Therefore, it is necessary to change "Cash" defined by the extension taxonomy to a child of "CurrentAssets". However, in the conventional processing, a user has to search for an item after the change which corresponds to "CurrentAsset" before the change, and hence a troublesome work is necessary. The analysis apparatus 100 automatically detects that "CurrentAsset" before the change and "CurrentAssets" after the change are matching information, and reports to the user. The user can confirm this information and thereby properly correct the extension taxonomy. As mentioned above, it is possible to perform analysis on the change contents, and hence even when a name of an item in the base taxonomy which the extension taxonomy refers to is changed, it is possible to properly correct the reference. Further, the comparison processing is also performed on the extension taxonomy. Therefore, even when a name of an item in an extension taxonomy in a resubmitted report is changed e.g. in an audit work, the analysis apparatus 100 makes it possible to grasp the fact that the name of the item has been changed and the change content of the item. Further, even when a name of an item has been changed e.g. in taxonomy development, it is possible to display the item before the change and the item after the change in parallel. The user can confirm the change by the display.

As described above, according to the analysis apparatus 100, even when an identifier of information has been changed, it is possible to automatically detect a pair of information items which are equivalent in meaning, and analyze the changed part and change contents to report to the user. This enables the user to easily confirm change contents in various situations, such as an administrative work, an audit work, and taxonomy development, which reduces a burden on the user.

Next, a description will be given of a processing procedure executed by the analysis apparatus 100 using flowcharts.

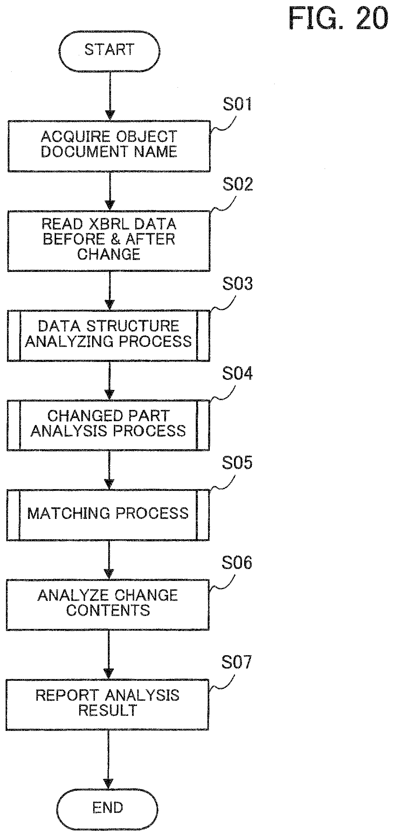

FIG. 20 is a flowchart of an entire process executed by the analysis apparatus.

[Step S01] The analysis apparatus 100 acquires a name of a document to be analyzed and an analysis instruction from the terminal apparatus 40 directly via the keyboard 22 or the mouse 23, or via the network 30. For example, the analysis apparatus 100 acquires a name of an instance document or a name of a schema to be compared.

[Step S02] The data structure analysis section 120 reads out XBRL data before and after the change which are to be compared from the XBRL data storage device 110 based on the name of the object document acquired in the step S01. If a linkbase is designated in the step S01, a reference relationship between documents is analyzed to identify a name of the schema.

[Step S03] The data structure analysis section 120 executes a data structure analysis process for analyzing the structures of the XBRL data before and after the change read out in the step S02, and extracting item-related information. By executing the data structure analysis process, the document reference structure information indicative of the document structure based on the reference relationship between the documents, the item and type information obtained by extracting definition information of the items, the item value information obtained by extracting item values, and the link structure information indicative of a link structure between the items are generated. The data structure analysis process will be described in detail hereinafter.

[Step S04] The change information analysis section 130 executes a changed part analysis process using the information generated in the step S03. At this time, as to items which could be associated, analysis of the change contents is also executed. By executing the changed part analysis process, a comparison result obtained by comparing the XBRL data before the change and the XBRL data after the change is generated. Here, the document reference structure comparison result 151, the item and type information comparison result 152, and the item value comparison result 153 are obtained. The changed part analysis process will be described in detail hereinafter.

[Step S05] The information matching section 140 executes a matching process on unassociated documents and unassociated items of the XBRL data before and after the change, which could not be associated and are detected in the step S04. By executing the matching process, unassociated documents before the change and unassociated documents after the change, and unassociated items before the change and unassociated items after the change are associated. The matching process will be described in detail hereinafter.

[Step S06] The change information analysis section 130 analyzes the change contents of the items newly associated in the step S05.

[Step S07] The change information analysis section 130 displays analysis results of the changed parts and change contents detected by the above-described processing procedure on the monitor 21 to report the results to the user. Further, the analysis results may be transmitted to the terminal apparatus 40 of the user via the network 30 to cause the terminal apparatus 40 to report the results to the user. As a result of the analysis, information (documents and items) existing only in the data before the change is reported to the user as deleted information. Information existing only in the data after the change is reported to the user as added information. Information existing in the data before and after the change is reported to the user as information changed in contents. Further, matching information obtained by the matching process is also reported to the user as information changed in contents.

By executing the above-described processing procedure, even when an identifier of information has been changed before and after the change, it is possible to automatically detect and associate a pair of information items, which are equivalent in meaning. This makes it possible to not only identify a changed part but also analyze change contents, and to report the analysis results to the user. As a result, it is only necessary for the user to confirm the information matched by the analysis apparatus 10 and the change contents, and the user is freed from work for finding matching candidates out of a lot of information items, which has been conventionally performed.

Hereinafter, a description will be given of the data structure analysis process (step S03), the changed part analysis process (step S04), and the matching process (step S05).

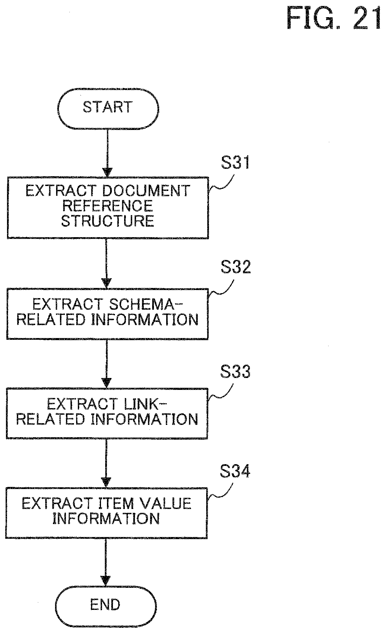

FIG. 21 is a flowchart of a procedure of the data structure analysis process.

The data structure analysis section 120 executes a process for analyzing read XBRL data.

[Step S31] The document reference structure analysis section 121 analyzes reference relationships between documents included in the read object XBRL data, and detects a reference structure of the documents based on the reference relationships. Then, the document reference structure analysis section 121 generates the document reference structure information 410 and 510 associated with the reference structure of the detected documents. When an extension taxonomy is included in the XBRL data, the reference structure of the documents including the extension taxonomy is analyzed. Then, if reporting has been designated, the generated document reference structure information 410 and 510 is sent to an apparatus as a requesting source. The apparatus as the requesting source can display a screen based on the acquired document reference structure information 410 and 510 to thereby report the analysis results to the user.

[Step S32] The item analysis section 122 extracts information related to items defined in the schema, such as the name and type of each item, definition contents, and an appearance order, from the schema included in the read XBRL data. Then, the extracted information is registered in the item and type information 420 and 520. If reporting has been designated, the item and type information 420 and 520 may be transmitted to a requesting source.

[Step S33] The item analysis section 122 further analyzes a link structure defined in each of linkbases from the linkbases included in the read XBRL data. Then, the item analysis section 122 generates the link structure information on a link basis based on the analysis results. For example, the item analysis section 122 generates the presentation link structure information 430 and 530 for the presentation link, and the reference link structure information 440 and 540 for the reference link. The link structure information is similarly generated also with respect to the calculation link, the definition link, and the label link, on an as-needed basis. If reporting has been designated, the link structure information may be transmitted to the requesting source.

[Step S34] The item analysis section 122 extracts values of items, reference context, the appearance order, and so forth, from the instance document included in the read XBRL data. Then, the item analysis section 122 generates the item value information based on the extracted information. If reporting has been designated, the item value information may be transmitted to the requesting source.

By executing the above-described processing procedure, the document reference structure information obtained by analyzing the reference structure between the documents in the object XBRL data is generated. Further, the link structure information obtained by analyzing the link structure based on the linkbases is generated, and the item and type information and the item value information obtained by extracting information on each item are generated.

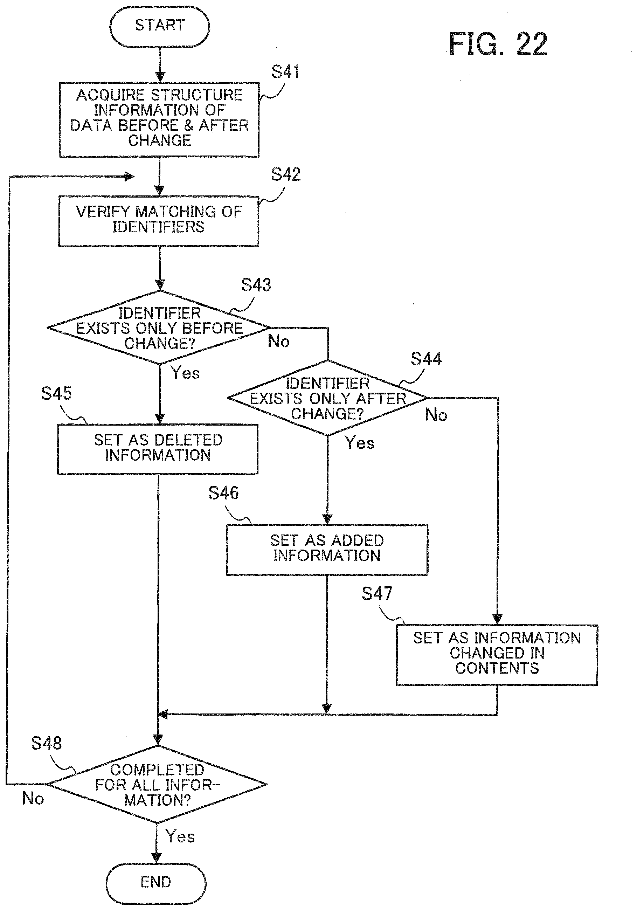

FIG. 22 is a flowchart of a procedure of the changed part analysis process.

[Step S41] The change information analysis section 130 acquires the structure information of the data before and after the change, generated by the data structure analysis section 120. For example, the change information analysis section 130 acquires the document reference structure information 410, the item and type information 420, and the item value information 450 before the change, and the document reference structure information 510, the item and type information 520, and the item value information 550 after the change.

[Step S42] The change information analysis section 130 compares the structure information of the data before the change and the structure information of the data after the change, acquired in the step S41. The document reference structure information 410 before the change and the document reference structure information 510 after the change are subjected to comparison of document identifiers (document names) of the documents based on the reference structure. The identifiers of the items (item name) are compared in the item and type information 420 before the change and the item and type information 520 after the change. The item value information 450 before the change and the item value information 550 after the change are subjected to comparison of identifiers (item names) of the items.

[Step S43] As a result of the comparison in the step S42, the change information analysis section 130 determines whether or not an identifier of information exists only in the data before the change, and does not exist in the data after the change. If an identifier of information exists only in the data before the change, the process proceeds to a step S45, whereas if not, the process proceeds to a step S44.

[Step S44] If an identifier of information does not exist only in the data before the change, the change information analysis section 130 determines whether or not the identifier of the information exists only in the data after the change. If the identifier of the information exists only in the data after the change, the process proceeds to a step S46, whereas if not, the process proceeds to a step S47.

[Step S45] If the identifier of the information exists only in the data before the change, the change information analysis section 130 judges that the information is deleted information, and performs registration in the comparison result. Thereafter, the process proceeds to a step S48.

[Step S46] If the identifier of the information exists only in the data after the change, the change information analysis section 130 judges that the information is added information, and performs registration in the comparison result. Thereafter, the process proceeds to the step S48.

[Step S47] If the identifier of the information exists in the data before and after the change, the change information analysis section 130 judges that the information is information changed in contents, and performs registration in the comparison result. Note that as to information of which the identifiers match, the change contents are also analyzed, and registration in the comparison result is performed.

[Step S48] The change information analysis section 130 determines whether or not comparing processing has been completed for all of the information items. If it is determined that the comparing processing has not been completed, the process returns to the step S42, wherein next information is checked. If it is determined that the comparing processing has been completed, the process is terminated.

The above-described processing procedure is applied to the document reference structure information 410 before the change and the document reference structure information 510 after the change to thereby generate the document reference structure comparison result 151. Further, the above-described processing procedure is applied to the item and type information 420 before the change and the item and type information 520 after the change to thereby generate the item and type information comparison result 152. Furthermore, the above-described processing procedure is applied to the item value information 450 before the change and the item value information 550 after the change to thereby generate the item value comparison result 153.

Hereafter, the matching process will be described. Here, the matching process will be described by dividing the same into document equivalency analysis and items equivalency analysis.

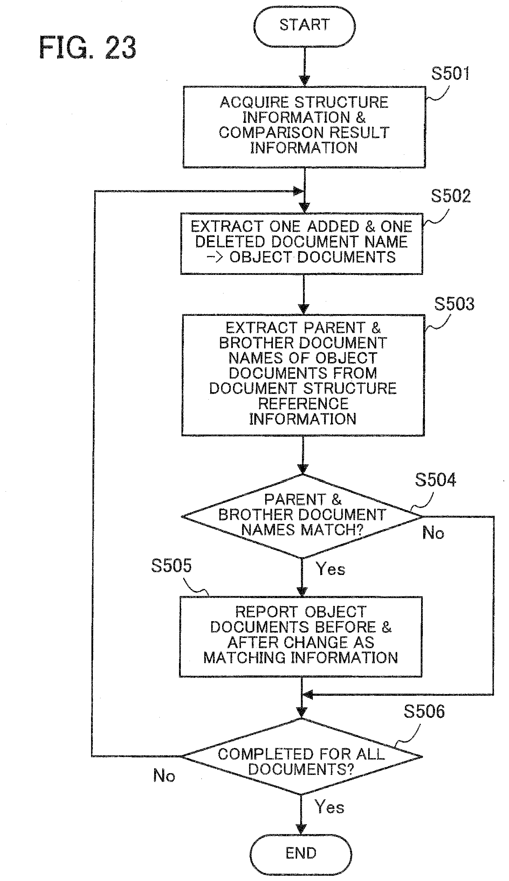

FIG. 23 is a flowchart of the matching (document equivalence analysis) process.

[Step S501] The document matching section 141 acquires the document reference structure information 410 before the change and the document reference structure information 510 after the change of the XBRL data, and the document reference structure comparison result 151a.

[Step S502] The document matching section 141 extracts one of the document names registered in the added information and one of the document names registered in the deleted information from the document reference structure comparison result 151a, each on a document name basis. The extracted documents are set as object documents.

[Step S503] The document matching section 141 extracts a document name as a parent and document names as brothers in reference relationship with respect to each extracted document, based on the document reference structure information 410 and 510, respectively.

[Step S504] The document matching section 141 confirms whether or not the parent document names and the brother document names of both the object documents extracted in the step S503 match, or whether or not they satisfy a predetermined matching condition. As the matching condition, a condition for regarding documents as matching, such as a condition that unmatching documents have only to be extension taxonomies, is determined in advance. If it is determined that the documents match, the process proceeds to a step S505. If it is determined that the documents do not match, the process proceeds to a step S506.

[Step S505] If it is determined that the documents match, the document matching section 141 reports the object documents before and after the change to the user as the matching information. The document matching section 141 deletes the object documents from the deleted information and the added information in the document reference structure comparison result 151a, and registers them in the matching information. Note that the documents determined to match are presented to the user before the registration, and the user may be prompted to confirm whether or not the matching has been correctly performed. If the user identifies that the documents do not match, the registration is cancelled.

[Step S506] The document matching section 141 determines whether or not the matching processing has been completed for all documents. If the matching processing has not been completed, the process returns to the step S502, wherein the processing is performed from selection of next object documents. If the matching processing has been completed, the document matching process is terminated.

By executing the above-described processing procedure, the documents different in identifier but equivalent are subjected to matching and are reflected on the comparison results. Thus, the document reference structure comparison result 151b is obtained.

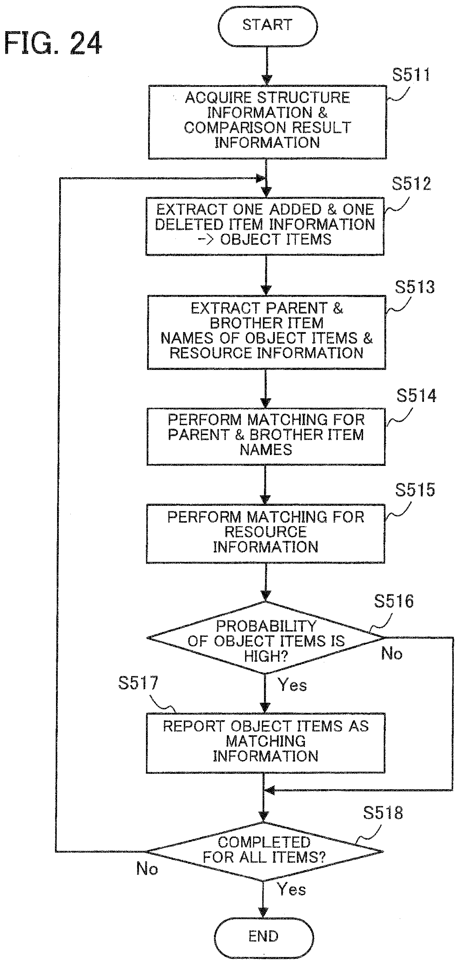

FIG. 24 is a flowchart of a procedure of the matching (item equivalence analysis) process. Note that in the following description, the matching process with respect to the item and type information comparison result 152a will be described for simplicity. It is possible to execute the same process with respect to the item value comparison result 153a.

[Step S511] The item matching section 142 acquires data structure information and a comparison result of the XBRL data before the change, and data structure information and a comparison result of the XBRL data after the change. For example, as the data structure information, the item matching section 142 acquires the presentation link structure information 430 and the reference link structure information 440 before the change, and the presentation link structure information 530 and the reference link structure information 540 after the change. Further, as the comparison results, the item matching section 142 acquires the item and type information comparison result 152a.

[Step S512] The item matching section 142 extracts one of the item names registered in the added information and one of the item names registered in the deleted information from the item and type information comparison result 152a, each on an item name basis. The extracted items are set as the object items.

[Step S513] The item matching section 142 extracts an item name as a parent and item names as brothers with respect to the extracted object items, based on the presentation link structure information 430 and 530, respectively. The item matching section 142 further extracts resource information of each object item based on the reference link structure information 440 and 540.

[Step S514] The item matching section 142 performs matching processing for checking the parent item names and the brother item names extracted in the step S513, against each other, between the object items and determining whether or not the parent item names, and the brother item names match, or whether or not they satisfy a predetermined matching condition. If it is determined that the items match, this pair of object items is set as a candidate, and the increase value of the probability to be set for the presentation link is set. As the number of relevant links is larger, the probability is set to a higher value. If it is determined that the items do not match, the pair is not set as a candidate.

[Step S515] The item matching section 142 executes matching processing for checking the resource information items extracted in the step S513 against each other between the object items, and determining whether or not the resource information items match. If it is determined that the resource information items match, the pair of the object items is set as a candidate, and the increase value of the probability to be set for the reference link is set. As the number of relevant links is larger, the probability is set to a higher value. If it is determined that the items do not match, the pair is not set as a candidate.

[Step S516] The item matching section 142 compares the probability between the pair of the object items set as the candidate in the matching processing in the steps S514 and S515, and another candidate. It is determined whether or not there is a candidate pair other than the object items, and if there is, it is determined whether or not the object items have the highest probability. If there is no other candidate pair, or the objet items have the highest probability, the process proceeds to a step S517, whereas if not, the process proceeds to a step S518.

[Step S517] If it is determined that the object items match, the item matching section 142 reports to the user the object items before and after the change as matching information. The item matching section 142 deletes the object items from the deleted information and the added information in the item and type information comparison result 152a, and registers them in the matching information. The items determined to match may be presented to the user before the registration to prompt the user to confirm whether or not the matching has been correctly performed. If the user designates that the items do not match, the registration is cancelled. Further, a plurality of candidates may be presented to the user to prompt the user to select a correct one. When a correct pair of the items is designated, the designated items are registered in the item and type information comparison result 152a according to the user's designation.

[Step S518] The item matching section 142 determines whether or not the matching processing has been completed for all items. If the matching processing has not been completed, the process returns to the step S512, wherein the processing is performed from selection of next object items. If the matching processing has been completed, the item matching process is terminated.

By executing the above-described processing procedure, the items different in identifier but equivalent are subjected to matching and are reflected on the comparison result. Thus, the item and type information comparison result 152b is obtained.

Although in the above-described matching process procedure, the matching process is executed based on the structure information and the comparison result information generated in the data structure analysis process and the changed part analysis process, the matching process may be executed again using the results of the matching process. For example, let it be assumed that a document as an object which is to be compared has items of A, B, and C, arranged in the mentioned order, and a document which the document is to be compared with has items of E, F, and G, arranged in the mentioned order, and these items have different identifiers from each other. Since the identifiers are different, it is impossible to associate the items according to the identifiers. However, by comparing the link structures using the above-described matching process procedure, it is possible to match the items. Let it be assumed that the matching process gives a comparison result in which the items A and E match, and the items C and G match. When the matching process is performed based on the comparison result, since the items A and E match and the items C and G match, it is possible to determine that the item B between the items A and C and the item F between the items E and G match.

Further, learning of the matching may be executed when a correct pair of items is acquired from the user in the step S517 in the matching process procedure illustrated in FIG. 24.

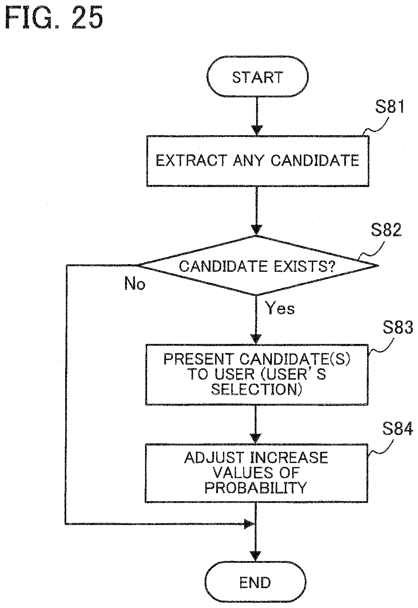

FIG. 25 is a flowchart of a procedure of a matching learning process.

[Step S81] The information matching section 140 extracts any candidate detected as matching information by the item matching process.

[Step S82] The information matching section 140 checks whether or not there is any candidate. If there is any candidate, the process proceeds to a step S83. If there is no candidate, the present process is terminated.

[Step S83] If there is any candidate, the information matching section 140 reports to the user the candidate(s) via the monitor 21 or the terminal apparatus 40. Then, the information matching section 140 waits for confirmation from the user, or user's selection if there a plurality of candidates, and acquires a user's instruction.

[Step S84] The information matching section 140 increases the increase value of the probability with respect to a link serving as a basis of object items selected by the user based on the user's instruction acquired in the step S83. Alternatively, the information matching section 140 reduces the increase value of the probability with respect to a link serving as a basis of object items which have not been selected. The increase value of the probability in each link is thus adjusted, followed by terminating the present process.

By executing the above-described processing procedure, weighting of the link is appropriately updated, whereby the increase value of the probability in the link serving as a basis of the correct selection is increased.

Note that the processing functions of the above-described embodiments can be realized by a computer. In this case, there is provided a program describing the details of processing of the functions which the analysis apparatus is to have. By executing the program by the computer, the processing functions described above are realized on the computer. The program describing the details of processing can be recorded in a computer-readable storage medium.

In case of distributing programs, for example, portable recording mediums, such as DVD (Digital Versatile Disk), CD-ROM (Compact Disk Read Only Memory) or the like in which the program is recorded are marketed. Further, it is also possible to store the program in a storage device of a server computer, and transfer the program from the server computer to the other computer via a network.

The computer which carries out the program stores, for example, the program which is recorded in the portable recording medium, or is transferred from the server computer in the storage device thereof. Then, the computer reads out the program from the storage device thereof, and carries out the processes according to the program. Note that the computer is also capable of directly reading out the program from the portable recording medium, and carrying out the processes according to the program. Further, the computer is also capable of carrying out the processes according to the program which is received, each time the program is transferred from the server computer.

The foregoing is considered as illustrative only of the principles of the present invention. Further, since numerous modifications and changes will readily occur to those skilled in the art, it is not desired to limit the invention to the exact construction and applications shown and described, and accordingly, the present invention is defined by all suitable modifications and equivalents falling within the scope of the invention according to the appended claims and their equivalents.

### Reference Signs List

- 10: analysis apparatus
- 11: document data storage means
- 11a: document data A
- 11b: document data B
- 12: data structure analysis means
- 13: change information analysis means
- 14: information matching means
- 20: display apparatus

## Claims

1. An analysis method of comparing documents and analyzing a changed part which does not match between the documents, the analysis method comprising:
reading out first Extensible Business Reporting Language (XBRL) data and second XBRL data from a storage device (110), the first XBRL data including a first instance document (210) that describes values of first items specified by item name, a first schema (220) referred to from the first instance document, and first linkbases (231, 232, 233, 234, 235) that are referred to from the first schema and describe links between the first items, the second XBRL data including a second instance document that describes values of second items specified by item name, a second schema referred to from the second instance document, and second linkbases that are referred to from the second schema and describe links between the second items;
analyzing the links between the first items described in the first linkbases to generate first link structure information (430, 440) that indicates parent-child relationships and sibling relationships between the first items;
analyzing the links between the second items in the second linkbases to generate second link structure information (530, 540) that indicates parent-child relationships and sibling relationships between the second items;
comparing item names of the first items defined in the first XBRL data with item names of the second items defined in the second XBRL data to detect a first unassociated item existing only in the first XBRL data and a second unassociated item existing only in the second XBRL data;
comparing parent-child relationships and sibling relationships related to the first unassociated item with parent-child relationships and sibling relationships related to the second unassociated item, based on the first and second link structure information (430, 440, 530, 540); and
associating the first unassociated item with the second unassociated item when the first and second unassociated items have a parent-child relationship or sibling relationship respectively with a specific first item and a specific second item, and when the specific first and second items have identical item names.

2. The analysis method according to claim 1, further comprising:
analyzing the first XBRL data to generate first document reference structure information (410) that indicates references from the first instance document (400) to the first linkbases and references between the first linkbases;
analyzing the second XBRL data to generate second document reference structure information (510) that indicates references from the second instance document (500) to the second linkbases and references between the second linkbases;
comparing document names of the first instance document and first linkbases with document names of the second instance document and second linkbases to detect a first unassociated document existing only in the first XBRL data and a second unassociated document existing only in the second XBRL data;
comparing parent-child relationships and sibling relationships related to the first unassociated document with parent-child relationships and sibling relationships related to the second unassociated document, based on the first and second document reference structure information (410, 510); and
associating the first unassociated document with the second unassociated document when the first unassociated document and second unassociated document have a parent-child relationship or sibling relationship respectively with a specific first linkbase and a specific second linkbase, and when the specific first and second linkbases have identical document names.

3. An analysis apparatus that compares documents, and analyzes a changed part which does not match between the documents, the analysis apparatus comprising:
storage means (110) for storing document data including first Extensible Business Reporting Language (XBRL) data and second XBRL data, the first XBRL data including a first instance document (210) that describes values of first items specified by item name, a first schema (220) referred to from the first instance document, and first linkbases (231, 232, 233, 234, 235) that are referred to from the first schema and describe links between the first items, the second XBRL data including a second instance document that describes values of second items specified by item name, a second schema referred to from the second instance document, and second linkbases that are referred to from the second schema and describe links between the second items;
data structure analysis means for analyzing the links between the first items described in the first linkbases to generate first link structure information (430, 440) that indicates parent-child relationships and sibling relationships between the first items, and for analyzing the links between the second items in the second linkbases to generate second link structure information (530, 540) that indicates parent-child relationships and sibling relationships between the second items;
change information analysis means (130) for reading out the first XBRL data and the second XBRL data from the storage means (110), and comparing item names of the first items defined in the first XBRL data with item names of the second items defined in the second XBRL data to detect a first unassociated item existing only in the first XBRL data and a second unassociated item existing only in the second XBRL data;
information matching means (140) for comparing parent-child relationships and sibling relationships related to the first unassociated item with parent-child relationships and sibling relationships related to the second unassociated item, based on the first and second link structure information (430, 440, 530, 540), and associating the first unassociated item with the second unassociated item when the first and second unassociated items have a parent-child relationship or sibling relationship respectively with a specific first item and a specific second item, and when the specific first and second items have identical item names.

4. The analysis apparatus according to claim 3, wherein:
the data structure analysis means (120) analyzes the first XBRL data to generate first document reference structure information (410) that indicates references from the first instance document (400) to the first linkbases and references between the first linkbases;
the data structure analysis means (120) further analyzes the second XBRL data to generate second document reference structure information (510) that indicates references from the second instance document (500) to the second linkbases and references between the second linkbases;
the change information analysis means (130) compares document names of the first instance document and first linkbases with document names of the second instance document and second linkbases to detect a first unassociated document existing only in the first XBRL data and a second unassociated document existing only in the second XBRL data; and
the information matching means (140) compares parent-child relationships and sibling relationships related to the first unassociated document with parent-child relationships and sibling relationships related to the second unassociated document, based on the first and second document reference structure information (410, 510), and associates the first unassociated document with the second unassociated document when the first unassociated document and second unassociated document have a parent-child relationship or sibling relationship respectively with a specific first linkbase and a specific second linkbase, and when the specific first and second linkbases have identical document names.

5. An analysis program for processing for comparing documents and analyzing a changed part which does not match between the documents, wherein the analysis program causes a computer to perform a procedure comprising:
reading out first Extensible Business Reporting Language (XBRL) data and second XBRL data from a storage device(110), the first XBRL data including a first instance document (210) that describes values of first items specified by item name, a first schema (220) referred to from the first instance document, and first linkbases (231, 232, 233, 234, 235) that are referred to from the first schema and describe links between the first items, the second XBRL data including a second instance document that describes values of second items specified by item name, a second schema referred to from the second instance document, and second linkbases that are referred to from the second schema and describe links between the second items;
analyzing the links between the first items described in the first linkbases to generate first link structure information (430, 440) that indicates parent-child relationships and sibling relationships between the first items;
analyzing the links between the second items in the second linkbases to generate second link structure information (530, 540) that indicates parent-child relationships and sibling relationships between the second items;
comparing item names of the first items defined in the first XBRL data with item names of the second items defined in the second XBRL data to detect a first unassociated item existing only in the first XBRL data and a second unassociated item existing only in the second XBRL data;
comparing parent-child relationships and sibling relationships related to the first unassociated item with parent-child relationships and sibling relationships related to the second unassociated item, based on the first and second link structure information (430, 440, 530, 540); and
associating the first unassociated item with the second unassociated item when the first and second unassociated items have a parent-child relationship or sibling relationship respectively with a specific first item and a specific second item, and when the specific first and second items have identical items names.

6. The analysis program according to claim 5, wherein the procedure performed by the computer further comprises:
analyzing the first XBRL data to generate first document reference structure information (410) that indicates references from the first instance document (400) to the first linkbases and references between the first linkbases,
analyzing the second XBRL data to generate second document reference structure information (510) that indicates references from the second instance document (500) to the second linkbases and references between the second linkbases,
comparing document names of the first instance document and first linkbases with document names of the second instance document and second linkbases to detect a first unassociated document existing only in the first XBRL data and a second unassociated document existing only in the second XBRL data,
comparing parent-child relationships and sibling relationships related to the first unassociated document with parent-child relationships and sibling relationships related to the second unassociated document, based on the first and second document reference structure information (410, 510), and
associating the first unassociated document with the second unassociated document when the first unassociated document and second unassociated document have a parent-child relationship or sibling relationship respectively with a specific first linkbase and a specific second linkbase, and when the specific first and second linkbases have identical document names.

## Patentansprüche

1. Analyseverfahren eines Vergleichens von Dokumenten und Analysierens eines geänderten Teils, der zwischen den Dokumenten nicht übereinstimmt, das Analyseverfahren umfassend:
Auslesen erster Extensible Business Reporting Language- (XBRL) Daten und zweiter XBRL-Daten aus einer Speichereinrichtung (110), wobei die ersten XBRL-Daten ein erstes Instanzendokument (210), das Werte von ersten Gegenständen beschreibt, die durch Gegenstandsnamen spezifiziert sind, ein erstes Schema (220), auf das von dem ersten Instanzendokument verwiesen wird, und erste Verknüpfungsbasen (231, 232, 233, 234, 235), auf die von dem ersten Schema verwiesen wird und die Verknüpfungen zwischen den ersten Gegenständen beschreiben, einschließen, wobei die zweiten XBRL-Daten ein zweites Instanzendokument, das Werte von zweiten Gegenständen beschreibt, die durch Gegenstandsnamen spezifiziert sind, ein zweites Schema, auf das von dem zweiten Instanzendokument verwiesen wird, und zweite Verknüpfungsbasen, auf die von dem zweiten Schema verwiesen wird und die Verknüpfungen zwischen den zweiten Gegenständen beschreiben, einschließen;
Analysieren der Verknüpfungen zwischen den in den ersten Verknüpfungsbasen beschriebenen ersten Gegenständen, um erste Verknüpfungsstrukturinformationen (430,440) zu erzeugen, die Eltern-Kind-Verhältnisse und Geschwisterverhältnisse zwischen den ersten Gegenständen angeben;
Analysieren der Verknüpfungen zwischen den zweiten Gegenständen in den zweiten Verknüpfungsbasen, um zweite Verknüpfungsstrukturinformationen (530, 540) zu erzeugen, die Eltern-Kind-Verhältnisse und Geschwisterverhältnisse zwischen den zweiten Gegenständen angeben;
Vergleichen von Gegenstandsnamen der in den ersten XBRL-Daten definierten ersten Gegenstände mit Gegenstandsnamen der in den zweiten XBRL-Daten definierten zweiten Gegenstände, um einen ersten nicht zugeordneten Gegenstand, der nur in den ersten XBRL-Daten vorhanden ist, und einen zweiten nicht zugeordneten Gegenstand, der nur in den zweiten XBRL-Daten vorhanden ist, zu detektieren;
Vergleichen von Eltern-Kind-Verhältnissen und Geschwisterverhältnissen, die den ersten nicht zugeordneten Gegenstand betreffen, mit Eltern-Kind-Verhältnissen und Geschwisterverhältnissen, die den zweiten nicht zugeordneten Gegenstand betreffen, basierend auf den ersten und zweiten Verknüpfungsstrukturinformationen (430, 440, 530, 540); und
Zuordnen des ersten nicht zugeordneten Gegenstands zu dem zweiten nicht zugeordneten Gegenstand, wenn die ersten und zweiten nicht zugeordneten Gegenstände ein Eltern-Kind-Verhältnis oder Geschwisterverhältnis jeweils mit einem spezifischen ersten Gegenstand und einem spezifischen zweiten Gegenstand haben und wenn die spezifischen ersten und zweiten Gegenstände identische Gegenstandsnamen haben.

2. Analyseverfahren nach Anspruch 1, weiter umfassend:
Analysieren der ersten XBRL-Daten, um erste Dokumentenverweisstrukturinformationen (410) zu erzeugen, die Verweise von dem ersten Instanzendokument (400) zu den ersten Verknüpfungsbasen und Verweise zwischen den ersten Verknüpfungsbasen angeben;
Analysieren der zweiten XBRL-Daten, um zweite Dokumentenverweisstrukturinformationen (510) zu erzeugen, die Verweise von dem zweiten Instanzendokument (500) zu den zweiten Verknüpfungsbasen und Verweise zwischen den zweiten Verknüpfungsbasen angeben;
Vergleichen von Dokumentennamen des ersten Instanzendokuments und ersten Verknüpfungsbasen mit Dokumentennamen des zweiten Instanzendokuments und zweiten Verknüpfungsbasen, um ein erstes nicht zugeordnetes Dokument, das nur in den ersten XBRL-Daten vorhanden ist, und ein zweites nicht zugeordnetes Dokument, das nur in den zweiten XBRL-Daten vorhanden ist, zu detektieren;
Vergleichen von Eltern-Kind-Verhältnissen und Geschwisterverhältnissen, die das erste nicht zugeordnete Dokument betreffen, mit Eltern-Kind-Verhältnissen und Geschwisterverhältnissen, die das zweite nicht zugeordnete Dokument betreffen, basierend auf den ersten und zweiten Dokumentenverweisstrukturinformationen (410, 510); und
Zuordnen des ersten nicht zugeordneten Dokuments zu dem zweiten nicht zugeordneten Dokument, wenn das erste nicht zugeordnete Dokument und das zweite nicht zugeordnete Dokument ein Eltern-Kind-Verhältnis oder Geschwisterverhältnis jeweils mit einer spezifischen ersten Verknüpfungsbasis und einer spezifischen zweiten Verknüpfungsbasis haben und wenn die spezifischen ersten und zweiten Verknüpfungsbasen identische Dokumentennamen haben.

3. Analysevorrichtung, die Dokumente vergleicht und einen geänderten Teil, der zwischen den Dokumenten nicht übereinstimmt, analysiert, wobei die Analysevorrichtung umfasst:
Speichermittel (110) zum Speichern von Dokumentendaten, die erste Extensible Business Reporting Language- (XBRL) Daten und zweite XBRL-Daten einschließen, wobei die ersten XBRL-Daten ein erstes Instanzendokument (210), das Werte von ersten Gegenständen beschreibt, die durch Gegenstandsnamen spezifiziert sind, ein erstes Schema (220), auf das von dem ersten Instanzendokument verwiesen wird, und erste Verknüpfungsbasen (231, 232, 233, 234, 235), auf die von dem ersten Schema verwiesen wird und die Verknüpfungen zwischen den ersten Gegenständen beschreiben, einschließen, wobei die zweiten XBRL-Daten ein zweites Instanzendokument, das Werte von zweiten Gegenständen beschreibt, die durch Gegenstandsnamen spezifiziert sind, ein zweites Schema, auf das von dem zweiten Instanzendokument verwiesen wird, und zweite Verknüpfungsbasen, auf die von dem zweiten Schema verwiesen wird und die Verknüpfungen zwischen den zweiten Gegenständen beschreiben, einschließen;
Datenstrukturanalysemittel zum Analysieren der Verknüpfungen zwischen den in den ersten Verknüpfungsbasen beschriebenen ersten Gegenständen, um erste Verknüpfungsstrukturinformationen (430,440) zu erzeugen, die Eltern-Kind-Verhältnisse und Geschwisterverhältnisse zwischen den ersten Gegenständen angeben, und zum Analysieren der Verknüpfungen zwischen zweiten Gegenständen in den zweiten Verknüpfungsbasen, um zweite Verknüpfungsstrukturinformationen (530, 540) zu erzeugen, die Eltern-Kind-Verhältnisse und Geschwisterverhältnisse zwischen den zweiten Gegenständen angeben;
Änderungsinformationsanalysemittel (130) zum Auslesen der ersten XBRL-Daten und der zweiten XBRL-Daten aus dem Speichermittel (110) und Vergleichen von Gegenstandsnamen der in den ersten XBRL-Daten definierten ersten Gegenstände mit Gegenstandsnamen der in den zweiten XBRL-Daten definierten zweiten Gegenstände, um einen ersten nicht zugeordneten Gegenstand, der nur in den ersten XBRL-Daten vorhanden ist, und einen zweiten nicht zugeordneten Gegenstand, der nur in den zweiten XBRL-Daten vorhanden ist, zu detektieren;
Informationsabgleichungsmittel (140) zum Vergleichen von Eltern-Kind-Verhältnissen und Geschwisterverhältnissen, die den ersten nicht zugeordneten Gegenstand betreffen, mit Eltern-Kind-Verhältnissen und Geschwisterverhältnissen, die den zweiten nicht zugeordneten Gegenstand betreffen, basierend auf den ersten und zweiten Verknüpfungsstrukturinformationen (430, 440, 530, 540), und Zuordnen des ersten nicht zugeordneten Gegenstands zu dem zweiten nicht zugeordneten Gegenstand, wenn die ersten und zweiten nicht zugeordneten Gegenstände ein Eltern-Kind-Verhältnis oder Geschwisterverhältnis jeweils mit einem spezifischen ersten Gegenstand und einem spezifischen zweiten Gegenstand haben und wenn die spezifischen ersten und zweiten Gegenstände identische Gegenstandsnamen haben.

4. Analysevorrichtung nach Anspruch 3, wobei:
das Datenstrukturanalysemittel (120) die ersten XBRL-Daten analysiert, um erste Dokumentenverweisstrukturinformationen (410) zu erzeugen, die Verweise von dem ersten Instanzendokument (400) zu den ersten Verknüpfungsbasen und Verweise zwischen den ersten Verknüpfungsbasen angeben;
das Datenstrukturanalysemittel (120) weiter die zweiten XBRL-Daten analysiert, um zweite Dokumentenverweisstrukturinformationen (510) zu erzeugen, die Verweise von dem zweiten Instanzendokument (500) zu den zweiten Verknüpfungsbasen und Verweise zwischen den zweiten Verknüpfungsbasen angeben;
das Änderungsinformationsanalysemittel (130) Dokumentennamen des ersten Instanzendokuments und erste Verknüpfungsbasen mit Dokumentennamen des zweiten Instanzendokuments und zweiten Verknüpfungsbasen vergleicht, um ein erstes nicht zugeordnetes Dokument, das nur in den ersten XBRL-Daten vorhanden ist, und ein zweites nicht zugeordnetes Dokument, das nur in den zweiten XBRL-Daten vorhanden ist, zu detektieren; und
das Informationsabgleichungsmittel (140) Eltern-Kind-Verhältnissen und Geschwisterverhältnissen, die das erste nicht zugeordnete Dokument betreffen, mit Eltern-Kind-Verhältnissen und Geschwisterverhältnissen, die das zweite nicht zugeordnete Dokument betreffen, basierend auf den ersten und zweiten Dokumentenverweisstrukturinformationen (410, 510) vergleicht und das erste nicht zugeordnete Dokument dem zweiten nicht zugeordneten Dokument zuordnet, wenn das erste nicht zugeordnete Dokument und das zweite nicht zugeordnete Dokument ein Eltern-Kind-Verhältnis oder Geschwisterverhältnis jeweils mit einer spezifischen ersten Verknüpfungsbasis und einer spezifischen zweiten Verknüpfungsbasis haben und wenn die spezifischen ersten und zweiten Verknüpfungsbasen identische Dokumentennamen haben.

5. Analyseprogramm zum Verarbeiten zum Vergleichen von Dokumenten und Analysieren eines geänderten Teils, der zwischen den Dokumenten nicht übereinstimmt, wobei das Analyseprogramm einen Computer veranlasst, eine Prozedur durchzuführen, die umfasst:
Auslesen erster Extensible Business Reporting Language- (XBRL) Daten und zweiter XBRL-Daten aus einer Speichereinrichtung (110), wobei die ersten XBRL-Daten ein erstes Instanzendokument (210), das Werte von ersten Gegenständen beschreibt, die durch Gegenstandsnamen spezifiziert sind, ein erstes Schema (220), auf das von dem ersten Instanzendokument verwiesen wird, und erste Verknüpfungsbasen (231, 232, 233, 234, 235), auf die von dem ersten Schema verwiesen wird und die Verknüpfungen zwischen den ersten Gegenständen beschreiben, einschließen, wobei die zweiten XBRL-Daten ein zweites Instanzendokument, das Werte von zweiten Gegenständen beschreibt, die durch Gegenstandsnamen spezifiziert sind, ein zweites Schema, auf das von dem zweiten Instanzendokument verwiesen wird, und zweite Verknüpfungsbasen, auf die von dem zweiten Schema verwiesen wird und die Verknüpfungen zwischen den zweiten Gegenständen beschreiben, einschließen;
Analysieren der Verknüpfungen zwischen den in den ersten Verknüpfungsbasen beschriebenen ersten Gegenständen, um erste Verknüpfungsstrukturinformationen (430,440) zu erzeugen, die Eltern-Kind-Verhältnisse und Geschwisterverhältnisse zwischen den ersten Gegenständen angeben;
Analysieren der Verknüpfungen zwischen den zweiten Gegenständen in den zweiten Verknüpfungsbasen, um zweite Verknüpfungsstrukturinformationen (530, 540) zu erzeugen, die Eltern-Kind-Verhältnisse und Geschwisterverhältnisse zwischen den zweiten Gegenständen angeben;
Vergleichen von Gegenstandsnamen der in den ersten XBRL-Daten definierten ersten Gegenstände mit Gegenstandsnamen der in den zweiten XBRL-Daten definierten zweiten Gegenstände, um einen ersten nicht zugeordneten Gegenstand, der nur in den ersten XBRL-Daten vorhanden ist, und einen zweiten nicht zugeordneten Gegenstand, der nur in den zweiten XBRL-Daten vorhanden ist, zu detektieren;
Vergleichen von Eltern-Kind-Verhältnissen und Geschwisterverhältnissen, die den ersten nicht zugeordneten Gegenstand betreffen, mit Eltern-Kind-Verhältnissen und Geschwisterverhältnissen, die den zweiten nicht zugeordneten Gegenstand betreffen, basierend auf den ersten und zweiten Verknüpfungsstrukturinformationen (430, 440, 530, 540); und
Zuordnen des ersten nicht zugeordneten Gegenstands zu dem zweiten nicht zugeordneten Gegenstand, wenn die ersten und zweiten nicht zugeordneten Gegenstände ein Eltern-Kind-Verhältnis oder Geschwisterverhältnis jeweils mit einem spezifischen ersten Gegenstand und einem spezifischen zweiten Gegenstand haben und wenn die spezifischen ersten und zweiten Gegenstände identische Gegenstandsnamen haben.

6. Analyseprogramm nach Anspruch 5, wobei die durch den Computer durchgeführte Prozedur weiter umfasst:
Analysieren der ersten XBRL-Daten, um erste Dokumentenverweisstrukturinformationen (410) zu erzeugen, die Verweise von dem ersten Instanzendokument (400) zu den ersten Verknüpfungsbasen und Verweise zwischen den ersten Verknüpfungsbasen angeben,
Analysieren der zweiten XBRL-Daten, um zweite Dokumentenverweisstrukturinformationen (510) zu erzeugen, die Verweise von dem zweiten Instanzendokument (500) zu den zweiten Verknüpfungsbasen und Verweise zwischen den zweiten Verknüpfungsbasen angeben,
Vergleichen von Dokumentennamen des ersten Instanzendokuments und ersten Verknüpfungsbasen mit Dokumentennamen des zweiten Instanzendokuments und zweiten Verknüpfungsbasen, um ein erstes nicht zugeordnetes Dokument, das nur in den ersten XBRL-Daten vorhanden ist, und ein zweites nicht zugeordnetes Dokument, das nur in den zweiten XBRL-Daten vorhanden ist, zu detektieren,
Vergleichen von Eltern-Kind-Verhältnissen und Geschwisterverhältnissen, die das erste nicht zugeordnete Dokument betreffen, mit Eltern-Kind-Verhältnissen und Geschwisterverhältnissen, die das zweite nicht zugeordnete Dokument betreffen, basierend auf den ersten und zweiten Dokumentenverweisstrukturinformationen (410, 510), und
Zuordnen des ersten nicht zugeordneten Dokuments zu dem zweiten nicht zugeordneten Dokument, wenn das erste nicht zugeordnete Dokument und das zweite nicht zugeordnete Dokument ein Eltern-Kind-Verhältnis oder Geschwisterverhältnis jeweils mit einer spezifischen ersten Verknüpfungsbasis und einer spezifischen zweiten Verknüpfungsbasis haben und wenn die spezifischen ersten und zweiten Verknüpfungsbasen identische Dokumentennamen haben.

## Revendications

1. Procédé d'analyse de comparaison de documents et d'analyse d'une partie changée qui ne correspond pas entre les documents, le procédé d'analyse comprenant :
l'extraction de premières données de langage de rapport financier extensible (XBRL) et de secondes données XBRL depuis un dispositif de stockage (110), les premières données XBRL incluant un premier document d'instance (210) qui décrit des valeurs de premiers éléments spécifiés par nom d'élément, un premier schéma (220) faisant l'objet d'une référence à partir du premier document d'instance, et des premières bases de liens (231, 232, 233, 234, 235) qui font l'objet d'une référence à partir du premier schéma et décrivent des liens entre les premiers éléments, les secondes données XBRL incluant un second document d'instance qui décrit des valeurs de seconds éléments spécifiés par nom d'élément, un second schéma faisant l'objet d'une référence à partir du second document d'instance, et des secondes bases de liens qui font l'objet d'une référence à partir du second schéma et décrivent des liens entre les seconds éléments ;
l'analyse des liens entre les premiers éléments décrits dans les premières bases de liens pour générer des premières informations de structure de lien (430, 440) qui indiquent des relations parent-enfant et des relations frère/soeur entre les premiers éléments ;
l'analyse des liens entre les seconds éléments dans les secondes bases de liens pour générer des secondes informations de structure de lien (530, 540) qui indiquent des relations parent-enfant et des relations frère/soeur entre les seconds éléments ;
la comparaison de noms d'élément des premiers éléments définis dans les premières données XBRL avec des noms d'élément des seconds éléments définis dans les secondes données XBRL pour détecter un premier élément non associé existant uniquement dans les premières données XBRL et un second élément non associé existant uniquement dans les secondes données XBRL ;
la comparaison de relations parent-enfant et de relations frère/soeur relatives au premier élément non associé avec des relations parent-enfant et relations frère/soeur relatives au second élément non associé, sur la base des premières et secondes informations de structure de lien (430, 440, 530, 540) ; et
l'association du premier élément non associé au second élément non associé lorsque les premier et second éléments non associés ont une relation parent-enfant ou une relation frère/soeur respectivement avec un premier élément spécifique et un second élément spécifique, et lorsque les premier et second éléments spécifiques ont des noms d'élément identiques.

2. Procédé d'analyse selon la revendication 1, comprenant en outre :
l'analyse des premières données XBRL pour générer des premières informations de structure de référence de document (410) qui indiquent des références du premier document d'instance (400) aux premières bases de liens et des références entre les premières bases de liens ;
l'analyse des secondes données XBRL pour générer des secondes informations de structure de référence de document (510) qui indiquent des références du second document d'instance (500) aux secondes bases de liens et des références entre les secondes bases de liens ;
la comparaison de noms de document du premier document d'instance et de premières bases de liens avec des noms de document du second document d'instance et de secondes bases de liens pour détecter un premier document non associé existant uniquement dans les premières données XBRL et un second document non associé existant uniquement dans les secondes données XBRL ;
la comparaison de relations parent-enfant et de relations frère/soeur relatives au premier document non associé avec des relations parent-enfant et des relations frère/soeur relatives au second document non associé, sur la base des premières et secondes informations de structure de référence de document (410, 510) ; et
l'association du premier document non associé au second document non associé lorsque le premier document non associé et le second document non associé ont une relation parent-enfant ou une relation frère/soeur respectivement avec une première base de liens spécifique et une seconde base de liens spécifique, et lorsque les première et seconde bases de liens spécifiques ont des noms de document identiques.

3. Appareil d'analyse qui compare des documents et analyse une partie changée/modifiée qui ne correspond pas entre les documents, l'appareil d'analyse comprenant :
un moyen de stockage (110) pour stocker des données de document incluant des premières données de langage de rapport financier extensible (XBRL) et des secondes données XBRL, les premières données XBRL incluant un premier document d'instance (210) qui décrit des valeurs de premiers éléments spécifiés par nom d'élément, un premier schéma (220) faisant l'objet d'une référence à partir du premier document d'instance, et des premières bases de liens (231, 232, 233, 234, 235) qui font l'objet d'une référence à partir du premier schéma et décrivent des liens entre les premiers éléments, les secondes données XBRL incluant un second document d'instance qui décrit des valeurs de seconds éléments spécifiés par nom d'élément, un second schéma faisant l'objet d'une référence à partir du second document d'instance, et des secondes bases de liens qui font l'objet d'une référence à partir du second schéma et décrivent des liens entre les seconds éléments ;
un moyen d'analyse de structure de données pour analyser les liens entre les premiers éléments décrits dans les premières bases de liens pour générer des premières informations de structure de lien (430, 440) qui indiquent des relations parent-enfant et des relations frère/soeur entre les premiers éléments, et pour analyser les liens entre les seconds éléments dans les secondes bases de liens pour générer des secondes informations de structure de lien (530, 540) qui indiquent des relations parent-enfant et des relations frère/soeur entre les seconds éléments ;
un moyen d'analyse d'informations de changement (130) pour extraire les premières données XBRL et les secondes données XBRL depuis le moyen de stockage (110), et comparer des noms d'élément des premiers éléments définis dans les premières données XBRL avec des noms d'élément des seconds éléments définis dans les secondes données XBRL pour détecter un premier élément non associé existant uniquement dans les premières données XBRL et un second élément non associé existant uniquement dans les secondes données XBRL ;
un moyen de mise en correspondance d'informations (140) pour comparer des relations parent-enfant et des relations frère/soeur relatives au premier élément non associé avec des relations parent-enfant et des relations frère/soeur relatives au second élément non associé, sur la base des premières et secondes informations de structure de lien (430, 440, 530, 540), et associer le premier élément non associé au second élément non associé lorsque les premier et second éléments non associés ont une relation parent-enfant ou une relation frère/soeur respectivement avec un premier élément spécifique et un second élément spécifique, et lorsque les premier et second éléments spécifiques ont des noms d'élément identiques.

4. Appareil d'analyse selon la revendication 3, dans lequel :
le moyen d'analyse de structure de données (120) analyse les premières données XBRL pour générer des premières informations de structure de référence de document (410) qui indiquent des références du premier document d'instance (400) aux premières bases de liens et des références entre les premières bases de liens ;
le moyen d'analyse de structure de données (120) analyse en outre les secondes données XBRL pour générer des secondes informations de structure de référence de document (510) qui indiquent des références du second document d'instance (500) aux secondes bases de liens et des références entre les secondes bases de liens ;
le moyen d'analyse d'informations de changement (130) compare des noms de document du premier document d'instance et de premières bases de liens avec des noms de document du second document d'instance et de secondes bases de liens pour détecter un premier document non associé existant uniquement dans les premières données XBRL et un second document non associé existant uniquement dans les secondes données XBRL ; et
le moyen de mise en correspondance d'informations (140) compare des relations parent-enfant et des relations frère/soeur relatives au premier document non associé avec des relations parent-enfant et des relations frère/soeur relatives au second document non associé, sur la base des premières et secondes informations de structure de référence de document (410, 510), et associe le premier document non associé au second document non associé lorsque le premier document non associé et le second document non associé ont une relation parent-enfant ou une relation frère/soeur respectivement avec une première base de liens spécifique et une seconde base de liens spécifique, et lorsque les première et seconde bases de liens spécifiques ont des noms de document identiques.

5. Programme d'analyse pour traiter une comparaison de documents et une analyse d'une partie changée qui ne correspond pas entre les documents, dans lequel le programme d'analyse amène un ordinateur à réaliser une procédure comprenant :
l'extraction de premières données de langage de rapport financier extensible (XBRL) et de secondes données XBRL depuis un dispositif de stockage (110), les premières données XBRL incluant un premier document d'instance (210) qui décrit des valeurs de premiers éléments spécifiés par nom d'élément, un premier schéma (220) faisant l'objet d'une référence à partir du premier document d'instance, et des premières bases de liens (231, 232, 233, 234, 235) qui font l'objet d'une référence à partir du premier schéma et décrivent des liens entre les premiers éléments, les secondes données XBRL incluant un second document d'instance qui décrit des valeurs de seconds éléments spécifiés par nom d'élément, un second schéma faisant l'objet d'une référence à partir du second document d'instance, et des secondes bases de liens qui font l'objet d'une référence à partir du second schéma et décrivent des liens entre les seconds éléments ;
l'analyse des liens entre les premiers éléments décrits dans les premières bases de liens pour générer des premières informations de structure de lien (430, 440) qui indiquent des relations parent-enfant et des relations frère/soeur entre les premiers éléments ;
l'analyse des liens entre les seconds éléments dans les secondes bases de liens pour générer des secondes informations de structure de lien (530, 540) qui indiquent des relations parent-enfant et des relations frère/soeur entre les seconds éléments ;
la comparaison de noms d'élément des premiers éléments définis dans les premières données XBRL avec des noms d'élément des seconds éléments définis dans les secondes données XBRL pour détecter un premier élément non associé existant uniquement dans les premières données XBRL et un second élément non associé existant uniquement dans les secondes données XBRL ;
la comparaison de relations parent-enfant et de relations frère/soeur relatives au premier élément non associé avec des relations parent-enfant et des relations frère/soeur relatives au second élément non associé, sur la base des premières et secondes informations de structure de lien (430, 440, 530, 540) ; et
l'association du premier élément non associé au second élément non associé lorsque les premier et second éléments non associés ont une relation parent-enfant ou une relation frère/soeur respectivement avec un premier élément spécifique et un second élément spécifique, et lorsque les premier et second éléments spécifiques ont des noms d'élément identiques.

6. Programme d'analyse selon la revendication 5, dans lequel la procédure réalisée par l'ordinateur comprend en outre :
l'analyse des premières données XBRL pour générer des premières informations de structure de référence de document (410) qui indiquent des références du premier document d'instance (400) aux premières bases de liens et des références entre les premières bases de liens,
l'analyse des secondes données XBRL pour générer des secondes informations de structure de référence de document (510) qui indiquent des références du second document d'instance (500) aux secondes bases de liens et des références entre les secondes bases de liens,
la comparaison de noms de document du premier document d'instance et des premières bases de liens avec des noms de document du second document d'instance et des secondes bases de liens pour détecter un premier document non associé existant uniquement dans les premières données XBRL et un second document non associé existant uniquement dans les secondes données XBRL,
la comparaison de relations parent-enfant et de relations frère/soeur relatives au premier document non associé avec des relations parent-enfant et des relations frère/soeur relatives au second document non associé, sur la base des premières et secondes informations de structure de référence de document (410, 510), et
l'association du premier document non associé au second document non associé lorsque le premier document non associé et le second document non associé ont une relation parent-enfant ou une relation frère/soeur respectivement avec une première base de liens spécifique et une seconde base de liens spécifique, et lorsque les première et seconde bases de liens spécifiques ont des noms de document identiques.
